# EUROPEAN PATENT APPLICATION

(11) **EP 3 659 803 A1**
(43) Date of publication of application: **03.06.2020**
(21) Application number: 20150365.3
(22) Date of filing: 01.02.2016
(51) Int. Cl.: B32B 27/30, B32B 27/18, B32B 27/20, C08J 7/04, C09D 4/02, B32B 27/36

(54) **TRANSPARENT RESIN LAMINATE**

(30) Priority: 18.03.2015 JP 2015054437; 25.11.2015 JP 2015229330
(62) Divisional of application: 16764550.6
(71) Applicant: Riken Technos Corporation, Tokyo 101-8336 (JP)
(72) Inventor: WASHIO, Nozomu, Chiyoda-ku, Tokyo 101-8336 (JP); HASHIMOTO, Taketo, Chiyoda-ku, Tokyo 101-8336 (JP)
(74) Representative: J A Kemp LLP

(57) **Abstract**

A transparent resin laminate comprises, in order from a surface layer side, a first hard coat, a second hard coat, and a transparent resin sheet layer, wherein the first hard coat is formed of a coating material containing no inorganic particles, the second hard coat is formed of a coating material containing inorganic particles, the transparent resin sheet has a thickness of 0.2 mm or more, and the following requirements (iv) and (v) are satisfied; (iv) a water contact angle at the first hard coat surface of 100° or more; and (v) a water contact angle at the first hard coat surface after 20,000 reciprocating wipes with a cotton of 100° or more.

## Description

### Technical Field

The present invention relates to a transparent resin laminate. More specifically, the present invention relates to a transparent resin laminate which has a small specific gravity and excellent scratch resistance and which can be used suitably as a window, a windshield, or the like for a vehicle, a window, a door, or the like for a building, a protective plate or the like for an electronic signboard, a front panel or the like for a household electric appliance such as a refrigerator, a door or the like of furniture such as a cupboard, a housing or the like for a television, a personal computer, a tablet type information device, or a smartphone, a show window, or the like.

### Background Art

Conventionally, an article using glass as a substrate has been used for a window, a windshield, or the like for a vehicle, a window, a door, or the like for a building, a protective plate or the like for an electronic signboard, a show window, or the like because of meeting a required characteristic such as transparency, rigidity, scratch resistance, or weather resistance. In recent years, glass has drawn attention as a member constituting a front panel of a door body for opening and closing a front portion of a main body of an article such as a refrigerator, a washing machine, a cupboard, or a costume shelf, or a flat panel of a lid body for opening and closing a flat portion of the main body, particularly, as a member constituting a panel surface from the sense of design with transparency. On the other hand, glass has disadvantages such as low impact resistance and consequent fragility; low processability; difficulty in handling; a high specific gravity and a consequent heavy weight; and difficulty in satisfying demand for making an article curved or flexible. Therefore, a material substituted for glass has been actively studied, and a transparent resin laminate having a transparent resin layer such as a polycarbonate resin or an acrylic resin and a hard coat layer has been proposed (for example, refer to Patent Literatures 1 and 2). However, scratch resistance thereof is still insufficient. A transparent resin laminate capable of maintaining initial characteristics even when being repeatedly squeezed with a wiper or the like or repeatedly wiped with a cloth or the like is required.

### Citation List

### Patent Literatures

Patent Literature 1: JP 2014-043101 A
Patent Literature 2: JP 2014-040017 A

### Summary of Invention

### Technical Problem

An object of the present invention is to provide a transparent resin laminate which has excellent scratch resistance and which can be used suitably as a window, a windshield, or the like for a vehicle, a window, a door, or the like for a building, a protective plate or the like for an electronic signboard, a front panel or the like for a household electric appliance such as a refrigerator, a door or the like of furniture such as a cupboard, a housing or the like for a television, a personal computer, a tablet type information device, or a smartphone, a show window, or the like. Another object of the present invention is to provide a transparent resin laminate preferably having excellent transparency, rigidity, scratch resistance, weather resistance, impact resistance, and processability, and capable of maintaining initial characteristics even when being repeatedly squeezed with a wiper or the like or repeatedly wiped with a cloth or the like. Still another object of the present invention is to provide a transparent resin laminate which can be used suitably as a window, a windshield, or the like for a vehicle, a window, a door, or the like for a building, a protective plate or the like for an electronic signboard, a front panel or the like for a household electric appliance such as a refrigerator, a door or the like of furniture such as a cupboard, a housing or the like for a television, a personal computer, a tablet type information device, or a smartphone, a show window, or the like.

### Solution to Problem

As a result of intensive studies, the present inventors have found that the above object can be achieved by a specific transparent resin laminate.

That is, various aspects of the present invention are as follows.
[1] A transparent resin laminate comprising, from a surface layer side, a first hard coat, a second hard coat, and a transparent resin sheet layer, wherein
   the first hard coat is formed of a coating material comprising:
   (A) 100 parts by mass of a polyfunctional (meth)acrylate;
   (B) 0.01 to 7 parts by mass of a water-repelling agent; and
   (C) 0.01 to 10 parts by mass of a silane coupling agent, and
   containing no inorganic particles,
   the second hard coat is formed of a coating material comprising:
   (A) 100 parts by mass of a polyfunctional (meth)acrylate; and
   (D) 50 to 300 parts by mass of inorganic fine particles having an average particle size of 1 to 300 nm, and
   the transparent resin sheet has a thickness of 0.2 mm or more.
[2] The transparent resin laminate described in [1], in which the (C) silane coupling agent comprises one or more selected from the group consisting of a silane coupling agent having an amino group and a silane coupling agent having a mercapto group.
[3] The transparent resin laminate described in [1] or [2], in which the (B) water-repelling agent comprises a (meth)acryloyl group-containing fluoropolyether water-repelling agent.
[4] The transparent resin laminate described in any one of [1] to [3], in which the second hard coat forming coating material further comprises (E) 0.01 to 1 part by mass of a leveling agent.
[5] A transparent resin laminate comprising, from a surface layer side, a first hard coat, a second hard coat, and a transparent resin sheet layer, wherein
   the first hard coat is formed of a coating material containing no inorganic particles,
   the second hard coat is formed of a coating material containing inorganic particles,
   the transparent resin sheet has a thickness of 0.2 mm or more, and
   the following requirements (i) to (iii) are satisfied:
   (i) a total light transmittance of 80% or more;
   (ii) a haze of 5% or less; and
   (iii) a yellowness index of 3 or less.
[6] A transparent resin laminate comprising, from a surface layer side, a first hard coat, a second hard coat, and a transparent resin sheet layer, wherein
   the first hard coat is formed of a coating material containing no inorganic particles,
   the second hard coat is formed of a coating material containing inorganic particles,
   the transparent resin sheet has a thickness of 0.2 mm or more, and
   the following requirements (iv) and (v) are satisfied;
   (iv) a water contact angle at the first hard coat surface of 100° or more; and
   (v) a water contact angle at the first hard coat surface after 20,000 reciprocating wipes with a cotton of 100° or more.
[7] An article comprising the transparent resin laminate described in any one of [1] to [6].

### Advantageous Effects of Invention

The transparent resin laminate of the present invention is excellent in transparency and scratch resistance. A preferable transparent resin laminate of the present invention is excellent in transparency, rigidity, scratch resistance, weather resistance, impact resistance, and processability, and can maintain initial characteristics even when being repeatedly squeezed with a wiper or the like or repeatedly wiped with a cloth or the like. Therefore, the transparent resin laminate can be used suitably as a window, a windshield, or the like for a vehicle, a window, a door, or the like for a building, a protective plate or the like for an electronic signboard, a front panel or the like for a household electric appliance such as a refrigerator, a door or the like of furniture such as a cupboard, a housing or the like for a television, a personal computer, a tablet type information device, or a smartphone, a show window, or the like.

### Brief Description of Drawings

[Fig. 1] Fig. 1 is a conceptual cross-sectional view illustrating one embodiment of the transparent resin laminate of the present invention.
[Fig. 2] Fig. 2 is a conceptual diagram of an apparatus used for forming the transparent resin sheet in Examples.
[Fig. 3] Fig. 3 is a conceptual diagram of an ultraviolet irradiator used for curing the hard coat in Examples.

### Description of Embodiments

The term "sheet" is used as a term including a film and a plate herein. The term "resin" is used as a term including a resin mixture comprising two or more resins and a resin composition comprising a component other than a resin.

A transparent resin laminate of the present invention includes, from a surface layer side, a first hard coat, a second hard coat, and a transparent resin sheet layer. This transparent resin laminate has high transparency and no coloration in order to be used as a material substituted for glass.

Here, the term "surface layer side" means a side closer to an outer surface when an article formed of a transparent resin laminate having a multilayer structure is used on site (that is, an outer surface of an article which is a finished product: for example, in a case of a show window, a surface on a side facing a surface on a commodity display side). In addition, herein, disposing one layer on a "surface layer side" of another layer includes that these layers are in direct contact with each other and that another single layer or a plurality of other layers is interposed therebetween.

### First hard coat

The first hard coat usually forms a surface of the transparent resin laminate of the present invention. The first hard coat usually forms a surface of an article when the article is produced using the transparent resin laminate of the present invention. The first hard coat exhibits good abrasion resistance, and serves to maintain a surface characteristic such as finger slidability even after being repeatedly wiped with a handkerchief or the like.

The first hard coat is formed of a coating material containing no inorganic particles. The first hard coat is preferably formed of a coating material comprising (A) 100 parts by mass of a polyfunctional (meth)acrylate; (B) 0.01 to 7 parts by mass of a water-repelling agent; and (C) 0.01 to 10 parts by mass of a silane coupling agent, and containing no inorganic particles.

The term "inorganic particles" referred to herein means particles not containing particles formed of an organic substance (i.e. a substance which can generate water and carbon dioxide by combustion).

The inorganic particles (for example, silica (silicon dioxide); metal oxide particles of aluminum oxide, zirconia, titania, zinc oxide, germanium oxide, indium oxide, tin oxide, indium tin oxide, antimony oxide, cerium oxide, or the like; metal fluoride particles of magnesium fluoride, sodium fluoride, or the like; metal sulfide particles; metal nitride particles; and metal particles) are highly effective in enhancing the hardness of a hard coat. On the other hand, an interaction between the inorganic particles and a resin component such as component (A) is weak, resulting in insufficient abrasion resistance. Therefore, the present invention allows the first hard coat usually constituting an outermost surface to contain no inorganic particles for retaining the abrasion resistance. On the other hand, the present invention allows a second hard coat to preferably contain a specific amount of inorganic particles having an average particle size of 1 to 300 nm for enhancing the hardness, and has thereby solved this problem.

Here, "containing no" inorganic particles means not containing a significant amount of inorganic particles. In the field of a hard coat forming coating material, the significant amount of inorganic particles is usually about 1 part by mass or more relative to 100 parts by mass of component (A). Therefore, "containing no" inorganic particles can be represented otherwise as follows. That is, the amount of inorganic particles is usually 0 parts by mass or more and less than 1 part by mass, preferably 0.1 parts by mass or less, and more preferably 0.01 parts by mass or less relative to 100 parts by mass of component (A).

### (A) Polyfunctional (meth)acrylate

The polyfunctional (meth)acrylate of component (A) is a (meth)acrylate having two or more (meth)acryloyl groups in one molecule. Since this component has two or more (meth)acryloyl groups in one molecule, it serves to form a hard coat through polymerization/curing with an active energy ray such as an ultraviolet ray or an electron beam.

Examples of the polyfunctional (meth)acrylate include a (meth)acryloyl group-containing bifunctional reactive monomer such as diethylene glycol di(meth)acrylate, neopentyl glycol di(meth)acrylate, 1,6-hexanediol di(meth)acrylate, polyethylene glycol di(meth)acrylate, 2,2'-bis(4-(meth)acryloyloxypolyethyleneoxyphenyl)propane, or 2,2'-bis(4-(meth)acryloyloxypolypropyleneoxyphenyl)propane; a (meth)acryloyl group-containing trifunctional reactive monomer such as trimethylolpropane tri(meth)acrylate, trimethylolethane tri(meth)acrylate, or pentaerythritol tri(meth)acrylate; a (meth)acryloyl group-containing tetrafunctional reactive monomer such as pentaerythritol tetra(meth)acrylate; a (meth)acryloyl group-containing hexafunctional reactive monomer such as dipentaerythritol hexaacrylate; a (meth)acryloyl group-containing octafunctional reactive monomer such as tripentaerythritol acrylate; and a polymer (e.g. oligomer and prepolymer) containing one or more kinds thereof as constituent monomers. These compounds can be used singly or in a mixture of two or more kinds thereof for the polyfunctional (meth)acrylate of component (A).

It should be noted that the term (meth)acrylate herein means an acrylate or a methacrylate.

### (B) Water-repelling agent

The water-repelling agent of component (B) serves to enhance fingerprint resistance.

Examples of the water-repelling agent include a wax water-repelling agent such as a paraffin wax, a polyethylene wax, and an acrylate-ethylene copolymer wax; a silicone water-repelling agent such as a silicone oil, a silicone resin, a polydimethylsiloxane, and an alkylalkoxysilane; and a fluorine-containing water-repelling agent such as a fluoropolyether water-repelling agent and a fluoropolyalkyl water-repelling agent. These compounds can be used singly or in a mixture of two or more kinds thereof as the water-repelling agent of component (B).

Among these compounds, a fluoropolyether water-repelling agent is preferable as the water-repelling agent of component (B) from a viewpoint of water repellency. A water-repelling agent comprising a compound having a (meth)acryloyl group and a fluoropolyether group in a molecule (hereinafter, abbreviated as a (meth)acryloyl group-containing fluoropolyether water-repelling agent) is more preferable as the water-repelling agent of component (B) from a viewpoint of preventing a trouble such as bleed-out of the water-repelling agent of component (B) because of a chemical bond or a strong interaction between the polyfunctional (meth)acrylate of component (A) and the water-repelling agent of component (B). An admixture of an acryloyl group-containing fluoropolyether water-repelling agent and a methacryloyl group-containing fluoropolyether water-repelling agent is still more preferable as the water-repelling agent of component (B) from a viewpoint of appropriately controlling a chemical bond or an interaction between the polyfunctional (meth)acrylate of component (A) and the water-repelling agent of component (B) to exhibit good water repellency while keeping high transparency. It should be noted that the (meth)acryloyl group-containing fluoropolyether water-repelling agent is clearly distinguished from component (A) in having a fluoropolyether group in a molecule. Herein, a compound having two or more (meth)acryloyl groups and having a fluoropolyether group in one molecule is the (meth)acryloyl group-containing fluoropolyether water-repelling agent, which is classified into component (B). That is, a compound having a fluoropolyether group is excluded from the definition of the polyfunctional (meth)acrylate of component (A).

The blending amount of the water-repelling agent of component (B) is usually 7 parts by mass or less, preferably 4 parts by mass or less, and more preferably 2 parts by mass or less relative to 100 parts by mass of the polyfunctional (meth)acrylate of component (A) from a viewpoint of preventing a trouble such as bleed-out of the water-repelling agent of component (B). At the same time, the blending amount of the water-repelling agent of component (B) is usually 0.01 parts by mass or more, preferably 0.05 parts by mass or more, and more preferably 0.1 parts by mass or more from a viewpoint of obtaining an effect of use of the water-repelling agent of component (B). The blending amount of the water-repelling agent may be usually 0.01 parts by mass or more and 7 parts by mass or less, preferably 0.01 parts by mass or more and 4 parts by mass or less, or 0.01 parts by mass or more and 2 parts by mass or less, preferably 0.05 parts by mass or more and 7 parts by mass or less, 0.05 parts by mass or more and 4 parts by mass or less, or 0.05 parts by mass or more and 2 parts by mass or less, or preferably 0.1 parts by mass or more and 7 parts by mass or less, 0.1 parts by mass or more and 4 parts by mass or less, or 0.1 parts by mass or more and 2 parts by mass or less.

### (C) Silane coupling agent

The silane coupling agent of component (C) serves to enhance adhesiveness between the first hard coat and the second hard coat.

The silane coupling agent is a silane compound having at least two kinds of different reactive groups selected from a hydrolyzable group (for example, an alkoxy group such as a methoxy group and an ethoxy group; an acyloxy group such as an acetoxy group; or a halogen group such as a chloro group) and an organic functional group (for example, an amino group, a mercapto group, a vinyl group, an epoxy group, a methacryloxy group, an acryloxy group, or an isocyanate group). Among these compounds, a silane coupling agent having an amino group (i.e. a silane compound having an amino group and a hydrolyzable group) and a silane coupling agent having a mercapto group (i.e. a silane compound having a mercapto group and a hydrolyzable group) are preferable as the silane coupling agent of component (C) from a viewpoint of adhesiveness. A silane coupling agent having an amino group is more preferable from a viewpoint of adhesiveness and odor.

Examples of the silane coupling agent having an amino group include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethylbutylidene) propylamine, N-phenyl-3-aminopropyltrimethoxysilane, and N-(vinylbenzyl)-2-aminoethyl-3-aminopropyltrimethoxysilane.

Examples of the silane coupling agent having a mercapto group include 3-mercaptopropylmethyldimethoxysilane and 3-mercaptopropyltrimethoxysilane.

These compounds can be used singly or in a mixture of two or more kinds thereof as the silane coupling agent of component (C).

The blending amount of the silane coupling agent of component (C) is usually 0.01 parts by mass or more, preferably 0.05 parts by mass or more, and more preferably 0.1 parts by mass or more relative to 100 parts by mass of the polyfunctional (meth)acrylate of component (A) from a viewpoint of obtaining an adhesiveness-enhancing effect reliably. At the same time, the blending amount of the silane coupling agent of component (C) may be usually 10 parts by mass or less, preferably 5 parts by mass or less, and more preferably 1 part by mass or less from a viewpoint of a pot life of a coating material. The blending amount of the silane coupling agent may be usually 0.01 parts by mass or more and 10 parts by mass or less, preferably 0.01 parts by mass or more and 5 parts by mass or less, or 0.01 parts by mass or more and 1 part by mass or less, or preferably 0.05 parts by mass or more and 10 parts by mass or less, 0.05 parts by mass or more and 5 parts by mass or less, or 0.05 parts by mass or more and 1 part by mass or less, or preferably 0.1 parts by mass or more and 10 parts by mass or less, 0.1 parts by mass or more and 5 parts by mass or less, or 0.1 parts by mass or more and 1 part by mass or less.

It should be noted that the blending amount of the silane coupling agent of component (C) in any usual or preferable range referred to herein can be combined with the blending amount of the water-repelling agent of component (B) in any usual or preferable range referred to above.

The first hard coat forming coating material preferably further comprises a compound having two or more isocyanate groups (-N=C=O) in one molecule and/or a photopolymerization initiator from a viewpoint of improving curability with an active energy ray.

Examples of the compound having two or more isocyanate groups in one molecule include methylenebis-4-cyclohexylisocyanate; a polyisocyanate such as a trimethylolpropane adduct form of tolylene diisocyanate, a trimethylolpropane adduct form of hexamethylene diisocyanate, a trimethylolpropane adduct form of isophorone diisocyanate, an isocyanurate form of tolylene diisocyanate, an isocyanurate form of hexamethylene diisocyanate, an isocyanurate form of isophorone diisocyanate, and a biuret form of hexamethylene diisocyanate; and a urethane crosslinking agent such as blocked isocyanates of the polyisocyanates. These compounds can be used singly or in a mixture of two or more kinds thereof as the compound having two or more isocyanate groups in one molecule. In crosslinking, a catalyst such as dibutyltin dilaurate and dibutyltin diethylhexoate may be added as necessary.

Examples of the photopolymerization initiator include a benzophenone compound such as benzophenone, methyl-o-benzoyl benzoate, 4-methylbenzophenone, 4,4'-bis(diethylamino) benzophenone, methyl o-benzoylbenzoate, 4-phenylbenzophenone, 4-benzoyl-4'-methyldiphenyl sulfide, 3,3',4,4'-tetra(tert-butylperoxycarbonyl) benzophenone, and 2,4,6-trimethylbenzophenone; a benzoin compound such as benzoin, benzoin methyl ether, benzoin ethyl ether, benzoin isopropyl ether, and benzyl methyl ketal; an acetophenone compound such as acetophenone, 2,2-dimethoxy-2-phenylacetophenone, and 1-hydroxycyclohexyl phenyl ketone; an anthraquinone compound such as methyl anthraquinone, 2-ethylanthraquinone, and 2-amylanthraquinone; a thioxanthone compound such as thioxanthone, 2,4-diethylthioxanthone, and 2,4-diisopropylthioxanthone; an alkylphenone compound such as acetophenone dimethyl ketal; a triazine compound; a biimidazole compound; an acylphosphine oxide compound; a titanocene compound; an oxime ester compound; an oxime phenylacetate compound; a hydroxyketone compound; and an aminobenzoate compound. These compounds can be used singly or in a mixture of two or more kinds thereof as the photopolymerization initiator.

The first hard coat forming coating material can comprise one or more additives such as an antistatic agent, a surfactant, a leveling agent, a thixotropy-imparting agent, an anti-fouling agent, a printability improver, an antioxidant, a weather resistance stabilizer, a light resistance stabilizer, an ultraviolet absorber, a heat stabilizer, organic fine particles, and an organic colorant, as desired.

The first hard coat forming coating material may comprise a solvent as desired for dilution to a concentration which allows easy application. The solvent is not particularly limited as long as the solvent neither reacts with any of components (A) to (C) and other optional components nor catalyzes (promotes) a self-reaction (including a degradation reaction) of these components. Examples of the solvent include 1-methoxy-2-propanol, ethyl acetate, n-butyl acetate, toluene, methyl ethyl ketone, methyl isobutyl ketone, diacetone alcohol, and acetone. These compounds can be used singly or in a mixture of two or more kinds thereof as the solvent.

The first hard coat forming coating material can be obtained by mixing and stirring these components.

A method for forming the first hard coat using the first hard coat forming coating material is not particularly limited, but any known web applying method can be used. Examples of the method include roll coating, gravure coating, reverse coating, roll brushing, spray coating, air knife coating, and die coating.

The thickness of the first hard coat is preferably 0.5 µm or more, and more preferably 1 µm or more from a viewpoint of abrasion resistance and hardness. At the same time, the thickness of the first hard coat is preferably 5 µm or less, more preferably 4 µm or less, and still more preferably 3 µm or less from a viewpoint of hardness and adhesiveness to the second hard coat. The thickness of the first hard coat may be preferably 0.5 µm or more and 5 µm or less, and more preferably 0.5 µm or more and 4 µm or less, 0.5 µm or more and 3 µm or less, 1 µm or more and 5 µm or less, 1 µm or more and 4 µm or less, or 1 µm or more and 3 µm or less.

### Second hard coat

The second hard coat is formed of a coating material containing inorganic particles. The second hard coat is preferably formed of a coating material comprising 100 parts by mass of the (A) polyfunctional (meth)acrylate and 50 to 300 parts by mass of (D) inorganic fine particles having an average particle size of 1 to 300 nm.

As the (A) polyfunctional (meth)acrylate for the second hard coat, the same compounds as those described above for the first hard coat forming coating material can be used. These compounds can be used singly or in a mixture of two or more kinds thereof as the polyfunctional (meth)acrylate of component (A).

### (D) Inorganic fine particles having an average particle size of 1 to 300 nm

The inorganic fine particles of component (D) serve to dramatically increase the surface hardness of the transparent resin laminate of the present invention.

Examples of the inorganic fine particles include silica (silicon dioxide); metal oxide fine particles of aluminum oxide, zirconia, titania, zinc oxide, germanium oxide, indium oxide, tin oxide, indium tin oxide, antimony oxide, cerium oxide, or the like; metal fluoride fine particles of magnesium fluoride, sodium fluoride, or the like; metal sulfide fine particles; metal nitride fine particles; and metal fine particles. These compounds can be used singly or in a mixture of two or more kinds thereof.

Among these particles, in order to obtain a hard coat having higher surface hardness, fine particles of silica or aluminum oxide are preferable, and fine particles of silica are more preferable. Examples of commercially available silica fine particles include Snowtex (trade name) available from Nissan Chemical Industries, Ltd. and Quartron (trade name) available from Fuso Chemical Co., Ltd.

In order to enhance dispersibility of inorganic fine particles in a coating material or enhance surface hardness of a hard coat obtained, it is preferable to use inorganic fine particles the surfaces of which have been treated with any one selected from a silane coupling agent such as vinylsilane and aminosilane; a titanate coupling agent; an aluminate coupling agent; an organic compound having a reactive functional group such as an ethylenically unsaturated bond group such as a (meth)acryloyl group, a vinyl group, and an allyl group, and an epoxy group; a surface-treatment agent such as a fatty acid and a fatty acid metal salt; and the like.

These compounds can be used singly or in a mixture of two or more kinds thereof for component (D).

The average particle size of the inorganic fine particles of component (D) is usually 300 nm or less, preferably 200 nm or less, and more preferably 120 nm or less from a viewpoint of retaining transparency of a hard coat and obtaining a hardness-improving effect reliably. On the other hand, the lower limit of the average particle size is not particularly specified, but the average particle size of inorganic fine particles usually available is about 1 nm at the finest.

The average particle size of the inorganic fine particles herein refers to a particle size at which a cumulative value from the smallest particle size reaches 50% by mass in a particle size distribution curve measured using a laser diffraction/scattering particle size analyzer "MT 3200 II" (trade name) available from Nikkiso Co., Ltd.

The blending amount of the inorganic fine particles of component (D) is usually 50 parts by mass or more, and preferably 80 parts by mass or more relative to 100 parts by mass of the polyfunctional (meth)acrylate of component (A) from a viewpoint of surface hardness. At the same time, the blending amount of the inorganic fine particles is usually 300 parts by mass or less, preferably 200 parts by mass or less, and more preferably 160 parts by mass or less from a viewpoint of transparency. The blending amount of the inorganic fine particles may be usually 50 parts by mass or more and 300 parts by mass or less, preferably 50 parts by mass or more and 200 parts by mass or less, or 50 parts by mass or more and 160 parts by mass or less, or preferably 80 parts by mass or more and 300 parts by mass or less, or 80 parts by mass or more and 200 parts by mass or less, or 80 parts by mass or more and 160 parts by mass or less.

### (E) Leveling agent

The second hard coat forming coating material preferably further comprises a leveling agent (E) from a viewpoint of smoothing a surface of the second hard coat to form the first hard coat easily.

Examples of the leveling agent include an acrylic leveling agent, a silicone leveling agent, a fluorine leveling agent, a silicone-acrylate copolymer leveling agent, a fluorine-modified acrylic leveling agent, a fluorine-modified silicone leveling agent, and a leveling agent obtained by introducing therein a functional group (for example, an alkoxy group such as a methoxy group and an ethoxy group, an acyloxy group, a halogen group, an amino group, a vinyl group, an epoxy group, a methacryloxy group, an acryloxy group, an isocyanate group, and the like). Among these compounds, a silicone-acrylate copolymer leveling agent is preferable as the leveling agent of component (E). These compounds can be used singly or in a mixture of two or more kinds thereof as component (E).

The blending amount of the leveling agent of component (E) is usually 0.01 parts by mass or more, preferably 0.1 parts by mass or more, and more preferably 0.2 parts by mass or more relative to 100 parts by mass of the polyfunctional (meth)acrylate of component (A) from a viewpoint of smoothing a surface of the second hard coat to form the first hard coat easily. At the same time, the blending amount of the leveling agent of component (E) may be 1 part by mass or less, preferably 0.6 parts by mass or less, and more preferably 0.4 parts by mass or less from a viewpoint of satisfactorily applying the first hard coat forming coating material on the second hard coat without being repelled. The blending amount of the leveling agent may be usually 0.01 parts by mass or more and 1 part by mass or less, preferably 0.01 parts by mass or more and 0.6 parts by mass or less, or 0.01 parts by mass or more and 0.4 parts by mass or less, or preferably 0.1 parts by mass or more and 1 part by mass or less, 0.1 parts by mass or more and 0.6 parts by mass or less, or 0.1 parts by mass or more and 0.4 parts by mass or less, or preferably 0.2 parts by mass or more and 1 part by mass or less, 0.2 parts by mass or more and 0.6 parts by mass or less, or 0.2 parts by mass or more and 0.4 parts by mass or less.

It should be noted that the blending amount of the leveling agent of component (E) in any usual or preferable range referred to herein can be combined with the blending amount of the inorganic fine particles of component (D) in any usual or preferable range referred to above.

The second hard coat forming coating material preferably further comprises a compound having two or more isocyanate groups (-N=C=O) in one molecule and/or a photopolymerization initiator from a viewpoint of improving curability with an active energy ray.

As the compound having two or more isocyanate groups in one molecule for the second hard coat, the same compounds as those described above for the first hard coat forming coating material can be used. These compounds can be used singly or in a mixture of two or more kinds thereof as the compound having two or more isocyanate groups in one molecule.

As the photopolymerization initiator for the second hard coat, the same compounds as those described above for the first hard coat forming coating material can be used. These compounds can be used singly or in a mixture of two or more kinds thereof as the photopolymerization initiator.

The second hard coat forming coating material can comprise one or more additives such as an antistatic agent, a surfactant, a thixotropy-imparting agent, an anti-fouling agent, a printability improver, an antioxidant, a weather resistance stabilizer, a light resistance stabilizer, an ultraviolet absorber, a heat stabilizer, a colorant, and organic fine particles, as desired.

The second hard coat forming coating material may comprise a solvent as desired for dilution to a concentration which allows easy application. The solvent is not particularly limited as long as the solvent neither reacts with any of components (A) and (D) and other optional components nor catalyzes (promotes) a self-reaction (including a degradation reaction) of these components. Examples of the solvent include 1-methoxy-2-propanol, ethyl acetate, n-butyl acetate, toluene, methyl ethyl ketone, methyl isobutyl ketone, diacetone alcohol, and acetone. Among these compounds, 1-methoxy-2-propanol is preferable. These compounds can be used singly or in a mixture of two or more kinds thereof as the solvent.

The second hard coat forming coating material can be obtained by mixing and stirring these components.

A method for forming the second hard coat using the second hard coat forming coating material is not particularly limited, but any known web applying method can be used. Specific examples thereof include roll coating, gravure coating, reverse coating, roll brushing, spray coating, air knife coating, and die coating.

The thickness of the second hard coat is preferably 10 µm or more, more preferably 15 µm or more, and still more preferably 18 µm or more from a viewpoint of surface hardness. At the same time, the thickness of the second hard coat is preferably 30 µm or less, more preferably 27 µm or less, and still more preferably 25 µm or less from a viewpoint of curling resistance and bending resistance. The thickness of the second hard coat may be preferably 10 µm or more and 30 µm or less, and more preferably 10 µm or more and 27 µm or less, 10 µm or more and 25 µm or less, 15 µm or more and 30 µm or less, 15 µm or more and 27 µm or less, 15 µm or more and 25 µm or less, 18 µm or more and 30 µm or less, 18 µm or more and 27 µm or less, or 18 µm or more and 25 µm or less.

It should be noted that the thickness of the second hard coat in any preferable range referred to herein can be combined with the thickness of the first hard coat in any preferable range referred to above.

### Transparent resin sheet

The transparent resin laminate of the present invention includes the second hard coat on at least one surface of a transparent resin sheet and further includes the first hard coat thereon. In some embodiments, the second hard coat may be formed directly, via an anchor coat, or via any transparent layer such as a transparent resin film layer on at least one surface of the transparent resin sheet. As the transparent resin sheet, in order to use the transparent resin laminate of the present invention as a material substituted for glass, any transparent resin sheet can be used as long as having a thickness within a predetermined range, having high transparency, and being not colored.

The total light transmittance (measured according to JIS K7361-1:1997 using a turbidimeter "NDH2000" (trade name) available from Nippon Denshoku Industries Co., Ltd.) of the transparent resin sheet is preferably 80% or more, more preferably 85% or more, still more preferably 88% or more, further still more preferably 89% or more, and most preferably 90% or more. The total light transmittance of the transparent resin sheet of 80% or more can easily make the total light transmittance of a transparent resin laminate formed including the transparent resin sheet 80% or more. A higher total light transmittance is more preferable.

The transparent resin sheet has a haze (measured according to JIS K7136:2000 using a turbidimeter "NDH2000" (trade name) available from Nippon Denshoku Industries Co., Ltd.) of preferably 5% or less, more preferably 3% or less, still more preferably 2% or less. The haze of the transparent resin sheet of 5% or less can easily make the haze of a transparent resin laminate formed including the transparent resin sheet 5% or less. A lower haze is more preferable.

The transparent resin sheet has an yellowness index (measured according to JIS K7105:1981 using a chromaticity meter "SolidSpec-3700" (trade name) available from Shimadzu Corporation) of preferably 3 or less, more preferably 2 or less, and still more preferably 1 or less. The yellowness index of the transparent resin sheet of 3 or less can easily make the yellowness index of a transparent resin laminate formed including the transparent resin sheet 3 or less. A lower yellowness index is more preferable.

The thickness of the transparent resin sheet is usually 0.2 mm or more, preferably 0.5 mm or more, more preferably 0.8 mm or more, and still more preferably 1 mm or more from a viewpoint of retaining strength and rigidity required as a member substituted for glass and from a viewpoint of imparting a deep design with a glass tone. At the same time, the thickness of the transparent resin sheet may be usually 10 mm or less, preferably 6 mm or less, and more preferably 3 mm or less from a viewpoint of meeting a demand for weight reduction of an article.

The thickness of the transparent resin sheet may be preferably 0.2 mm or more and 10 mm or less, and more preferably 0.2 mm or more and 6 mm or less, 0.2 mm or more and 3 mm or less, 0.5 mm or more and 10 mm or less, 0.5 mm or more and 6 mm or less, 0.5 mm or more and 3 mm or less, 0.8 mm or more and 10 mm or less, 0.8 mm or more and 6 mm or less, 0.8 mm or more and 3 mm or less, 1 mm or more and 10 mm or less, 1 mm or more and 6 mm or less, or 1 mm or more and 3 mm or less. It should be noted that the thickness of the transparent resin sheet in any preferable range referred to herein can be combined with the thickness(es) of the first hard coat and/or the second hard coat in any preferable range referred to above.

The tensile elastic modulus of the transparent resin sheet is preferably 1,500 MPa or more, and more preferably 1,800 MPa or more from a viewpoint of retaining strength and rigidity required as a member substituted for glass. The upper limit of the tensile elastic modulus is not particularly specified, but the tensile elastic modulus is about 10000 MPa at most within a usually available range because of a resin sheet. The tensile elastic modulus was measured under conditions of a test piece type 1B and a pulling rate of 50 mm/min, according to JIS K7127:1999.

The glass transition temperature of a resin constituting the transparent resin sheet is usually 80°C or higher, preferably 90°C or higher, more preferably 100°C or higher, and still more preferably 110°C or higher from a viewpoint of retaining heat resistance (including both heat resistance required at the time of producing an article and heat resistance required at the time of using the article). In an embodiment where the transparent resin sheet comprises two or more kinds of resins as constituent resins, a resin having the lowest glass transition temperature among these resins preferably satisfies the above range.

The glass transition temperature of a resin constituting the transparent resin sheet is usually 170°C or lower, preferably 160°C or lower, more preferably 155°C or lower from a viewpoint of processability at the time of producing an article. Incidentally, when the transparent resin sheet comprises two or more kinds of resins as constituent resins, a resin having the highest glass transition temperature among these resins preferably satisfies the above range.

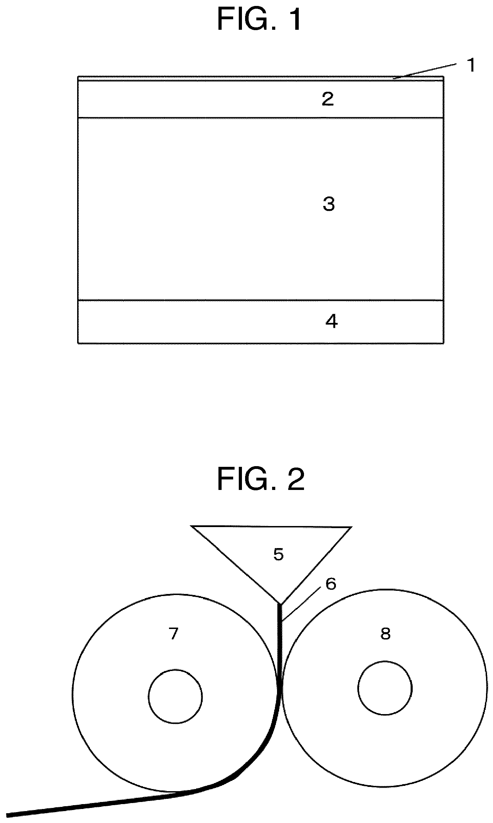

Herein, the glass transition temperature is an intermediate point glass transition temperature calculated by drawing a graph in accordance with Fig. 2 of ASTMD 3418 for glass transition appearing in a curve measured in the last temperature rising process in a temperature program in which the temperature of a sample is raised to 200°C at a temperature rising rate of 50°C/min., is held at 200°C for 10 minutes, is then cooled to 50°C at a temperature falling rate of 20°C/min., is held at 50°C for 10 minutes, and is then raised to 200°C at a temperature rising rate of 20°C/min. using a Diamond DSC type differential scanning calorimeter available from Perkin Elmer Japan Co., Ltd.

A resin of the transparent resin sheet is not limited, but examples thereof include a polyester resin such as aromatic polyester or aliphatic polyester; an acrylic resin; a polycarbonate resin; a polyolefin resin such as polyethylene, polypropylene, or polymethylpentene; a cellulose resin such as cellophane, triacetylcellulose, diacetylcellulose, or acetyl cellulose butyrate; a styrene resin such as polystyrene, an acrylonitrile-butadiene-styrene copolymer resin (ABS resin), a styrene-ethylene-propylene-styrene copolymer, a styrene-ethylene-ethylene-propylene-styrene copolymer, or a styrene-ethylene-butadiene-styrene copolymer; a polyvinyl chloride resin; a polyvinylidene chloride resin; a fluorine-containing resin such as polyvinylidene fluoride; polyvinyl alcohol, ethylene vinyl alcohol, polyether ether ketone, nylon, polyamide, polyimide, polyurethane, polyetherimide, polysulfone, and polyethersulfone. These transparent resin sheets include an unstretched sheet, a uniaxially stretched sheet, and a biaxially stretched sheet. These transparent resin sheets also include a laminated sheet obtained by laminating two or more layers of one or more of these sheets.

When the transparent resin sheet is a laminated sheet, a lamination method is not limited, but can be laminated by any method. Examples thereof include a method for obtaining each resin sheet by any method and then subjecting the resin sheets to dry lamination or heat lamination; a method for melting each constituent material with an extruder to obtain a laminated sheet by T-die co-extrusion using a feed block process, a multi-manifold process, or a stack plate process; an extrusion lamination method for obtaining at least one resin sheet by any method and then melting and extruding another resin sheet onto the resin sheet; and a method for forming a resin sheet by melt extrusion onto any film substrate or by applying and drying a coating material comprising a constituent material and a solvent thereonto, peeling the formed resin sheet from the film substrate, and transferring the resin sheet onto another resin sheet; and a method for combining two or more of these methods.

When the transparent resin sheet is a laminated sheet, embossing may be applied between any layers, as desired, in order to enhance the sense of design.

When the transparent resin sheet is a laminated sheet, a printed layer may be provided between any layers, as desired, in order to enhance the sense of design. The printed layer can be formed by printing any pattern using an any ink and any printing machine. At this time, printing is preferably performed partially or using a transparent ink from a viewpoint of imparting a deep design with a glass tone. The number of the printed layer is not limited to one, but may be two or more.

Among these sheets, as the transparent resin sheet, the following examples are preferable from viewpoints of mechanical properties, transparency, and non-coloration:
(a1) an acrylic resin sheet;
(a2) an aromatic polycarbonate resin sheet;
(a3) a polyester resin sheet (excluding a resin sheet formed of an acrylic resin or an aromatic polycarbonate resin); or
(a4) a laminated sheet formed of any one or more types of the transparent resin sheets (a1) to (a3).

The (a1) acrylic resin sheet is a sheet formed of a resin mainly comprising an acrylic resin such as polymethyl methacrylate or polyethyl methacrylate (usually more than 50% by mass, preferably 60% by mass or more, more preferably 70% by mass or more).

Examples of the acrylic resin include a (meth)acrylate (co)polymer, a copolymer of comonomers comprising a (meth)acrylate, and a modified product thereof. It should be noted that the term (meth)acrylic means acrylic or methacrylic. The (co)polymer means a polymer or a copolymer.

Examples of the (meth)acrylate (co)polymer include polymethyl (meth)acrylate, polyethyl (meth)acrylate, polypropyl (meth)acrylate, polybutyl (meth)acrylate, a methyl (meth)acrylate-butyl (meth)acrylate copolymer, and an ethyl (meth)acrylate-butyl (meth)acrylate copolymer.

Examples of the copolymer of comonomers comprising a (meth)acrylate include an ethylene-methyl (meth)acrylate copolymer, a styrene-methyl (meth)acrylate copolymer, a vinylcyclohexane-methyl (meth)acrylate copolymer, a maleic anhydride-methyl (meth)acrylate copolymer, and an N-substituted maleimide-methyl (meth)acrylate copolymer.

Examples of the modified product include a polymer into which a lactone ring structure is introduced by an intramolecular cyclization reaction; a polymer into which glutaric anhydride is introduced by an intramolecular cyclization reaction; and a polymer into which an imide structure is introduced by a reaction with an imidating agent (for example, methyl amine, cyclohexyl amine, or ammonia).

These compounds can be used singly or in a mixture of two or more kinds thereof for the acrylic resin.

Preferable examples of an optional component(s) which can be contained in the acrylic resin include a core-shell rubber. When the total amount of the acrylic resin and the core-shell rubber is 100 parts by mass, by using 0 to 40 parts by mass of the core-shell rubber (100 to 60 parts by mass of the acrylic resin), preferably 0 to 30 parts by mass of the core-shell rubber (100 to 70 parts by mass of the acrylic resin), cutting processability and impact resistance of the (a1) acrylic resin sheet can be enhanced.

Examples of the core-shell rubber include a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer, and a methacrylate-acrylonitrile/acrylate rubber graft copolymer. These compounds can be used singly or in a mixture of two or more kinds thereof for the core-shell rubber.

Other optional components which can be contained in the acrylic resin include a thermoplastic resin other than the acrylic resin or the core-shell rubber; a pigment, an inorganic filler, an organic filler, and a resin filler; and an additive such as a lubricant, an antioxidant, a weather resistance stabilizer, a heat stabilizer, a release agent, an antistatic agent, a nucleating agent, or a surfactant. The blending amount of the optional component(s) may be usually 25 parts by mass or less, and preferably about from 0.01 to 10 parts by mass when the total amount of the acrylic resin and the core-shell rubber is 100 parts by mass.

The (a2) aromatic polycarbonate resin sheet is a sheet formed of a resin mainly comprising an aromatic polycarbonate resin (usually more than 50% by mass, preferably 70% by mass or more, more preferably 90% by mass or more).

Examples of the aromatic polycarbonate resin include a polymer obtained by an interfacial polymerization method for an aromatic dihydroxy compound such as bisphenol A, dimethyl bisphenol A, or 1,1-bis(4-hydroxyphenyl)-3,3,5-trimethylcyclohexane and phosgene; and a polymer obtained by a transesterification reaction between an aromatic dihydroxy compound such as bisphenol A, dimethyl bisphenol A, or 1,1-bis(4-hydroxyphenyl)-3,3,5-trimethylcyclohexane and a carbonate diester such as diphenyl carbonate. These compounds can be used singly or in a mixture of two or more kinds thereof for the aromatic polycarbonate resin.

Preferable examples of optional components which can be contained in the aromatic polycarbonate resin include a core-shell rubber. When the total amount of the aromatic polycarbonate resin and the core-shell rubber is 100 parts by mass, by using 0 to 30 parts by mass of the core-shell rubber (100 to 70 parts by mass of the aromatic polycarbonate resin), preferably 0 to 10 parts by mass of the core-shell rubber (100 to 90 parts by mass of the aromatic polycarbonate resin), cutting processability and impact resistance of the (a2) aromatic polycarbonate resin can be enhanced.

Examples of the core-shell rubber include a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer, and a methacrylate-acrylonitrile/acrylate rubber graft copolymer. These compounds can be used singly or in a mixture of two or more kinds thereof for the core-shell rubber.

The aromatic polycarbonate resin can further comprise, as desired, a thermoplastic resin other than an aromatic polycarbonate resin or a core-shell rubber; a pigment, an inorganic filler, an organic filler, and a resin filler; and an additive such as a lubricant, an antioxidant, a weather resistance stabilizer, a heat stabilizer, a release agent, an antistatic agent, or a surfactant within a range not contradictory to an object of the present invention. The blending amount of the optional component(s) may be usually about from 0.01 to 10 parts by mass when the total amount of the aromatic polycarbonate resin and the core-shell rubber is 100 parts by mass.

The (a3) polyester resin sheet is a sheet formed of a resin mainly comprising a polyester resin such as polyethylene terephthalate (usually more than 50% by mass, preferably 80% by mass or more, more preferably 90% by mass or more) (excluding the (a1) acrylic resin sheet or the (a2) aromatic polycarbonate resin sheet). The polyester resin sheet includes an unstretched sheet, a uniaxially stretched sheet, and a biaxially stretched sheet. The polyester resin sheet also includes a laminated sheet obtained by laminating one or more kinds of these sheets.

The (a3) polyester resin sheet is preferably a sheet formed of a resin mainly comprising an amorphous or low crystalline aromatic polyester resin (usually more than 50%, preferably 80% by mass or more, more preferably 90% by mass or more).

Examples of the amorphous or low crystalline aromatic polyester resin include a polyester copolymer formed of an aromatic polycarboxylic acid component such as terephthalic acid, isophthalic acid, orthophthalic acid, or naphthalene dicarboxylic acid and a polyhydric alcohol component such as ethylene glycol, diethylene glycol, neopentyl glycol, 1,2-butanediol, 1,3-butanediol, 1,4-butanediol, 1,5-pentanediol, 3-methyl-1,5-pentanediol, 2-methyl-1,3-propanediol, or 1,4-cyclohexanedimethanol.

Examples of the amorphous or low crystalline aromatic polyester resin include a single type or a mixture of two or more types of a glycol-modified polyethylene terephthalate (PETG) comprising 50 mol% of terephthalic acid, 30 to 40 mol% of ethylene glycol, and 10 to 20 mol% of 1,4-cyclohexanedimethanol; a glycol-modified polycyclohexylenedimethylene terephthalate (PCTG) comprising 50 mol% of terephthalic acid, 16 to 21 mol% of ethylene glycol, and 29 to 34 mol% of 1,4-cyclohexanedimethanol; an acid-modified polycyclohexylenedimethylene terephthalate (PCTA) comprising 25 to 49.5 mol% of terephthalic acid, 0.5 to 25 mol% of isophthalic acid, and 50 mol% of 1,4-cyclohexanedimethanol; an acid-modified and glycol-modified polyethylene terephthalate comprising 30 to 45 mol% of terephthalic acid, 5 to 20 mol% of isophthalic acid, 35 to 48 mol% of ethylene glycol, 2 to 15 mol% of neopentyl glycol, less than 1 mol% of diethylene glycol, and less than 1 mol% of bisphenol A; and an acid-modified and glycol-modified polyethylene terephthalate comprising 45 to 50 mol% of terephthalic acid, 5 to 0 mol% of isophthalic acid, 25 to 45 mol% of 1,4-cyclohexanedimethanol, and 25 to 5 mol% of 2,2,4,4,-tetramethyl-1,3-cyclobutanediol, when the total amount of monomers is 100 mol%.

Herein, in a second melting curve (i.e. a melting curve measured in the last temperature rising process) measured by a temperature program in which the temperature of a sample is held at 320°C for five minutes, is then cooled to -50°C at a temperature falling rate of 20°C/min., is held at -50°C for five minutes, and is then raised to 320°C at a temperature rising rate of 20°C/min. using a Diamond DSC type differential scanning calorimeter available from Perkin Elmer Japan Co., Ltd, a polyester having a heat of fusion of 10 J/g or less was defined as an amorphous resin, and a polyester having a heat of fusion of more than 10 J/g and 60 J/g or less was defined as a low crystalline resin.

The polyester resin can comprise another component, as desired, within a range not contradictory to an object of the present invention. Examples of the optional component which can be contained in the polyester resin include a thermoplastic resin other than the polyester resin; a pigment, an inorganic filler, an organic filler, and a resin filler; and an additive such as a lubricant, an antioxidant, a weather resistance stabilizer, a heat stabilizer, a release agent, an antistatic agent, or a surfactant. The blending amount of the optional component(s) may be usually 25 parts by mass or less, and preferably about from 0.01 to 10 parts by mass when the amount of the polyester resin is 100 parts by mass.

Preferable examples of an optional component which can be contained in the polyester resin include a core-shell rubber. By using the core-shell rubber, impact resistance of the (a3) polyester resin sheet can be improved.

Examples of the core-shell rubber include a methacrylate-styrene/butadiene rubber graft copolymer, an acrylonitrile-styrene/butadiene rubber graft copolymer, an acrylonitrile-styrene/ethylene-propylene rubber graft copolymer, an acrylonitrile-styrene/acrylate graft copolymer, a methacrylate/acrylate rubber graft copolymer, and a methacrylate-acrylonitrile/acrylate rubber graft copolymer. These compounds can be used singly or in a mixture of two or more kinds thereof for the core-shell rubber.

When the amount of the polyester resin is 100 parts by mass, the blending amount of the core-shell rubber is preferably 0.5 parts by mass or more in order to improve impact resistance. At the same time, the blending amount of the core-shell rubber is preferably 5 parts by mass or less, and more preferably 3 parts by mass or less in order to retain transparency.

For example, the (a4) laminated sheet formed of any one or more types of the transparent resin sheets (a1) to (a3) can be obtained by co-extrusion film formation so as to obtain a desired layer structure using any co-extrusion apparatus such as a feed block process type, a multi-manifold process type, or a stack plate process type; or by obtaining any one or more types of the transparent resin sheets (a1) to (a3) using any film-forming apparatus and then subjecting the obtained sheets to heat lamination or dry lamination so as to obtain a desired layer structure; or by obtaining any one type of the transparent resin sheets (a1) to (a3) using any film-forming apparatus and then performing extrusion lamination so as to obtain a desired layer structure using the obtained sheet as a substrate.

For the transparent resin sheet, a printed layer may be provided on a second hard coat forming surface or on a surface opposite to the second hard coat forming surface, as desired, in order to enhance the sense of design. The printed layer can be provided in order to impart high designability to an article produced using the transparent resin laminate of the present invention. The printed layer can be formed by printing any pattern using an any ink and any printing machine. A detailed method for forming the printed layer will be described below. Incidentally, when the printed layer is provided on the second hard coat forming surface, printing is preferably performed partially or using a transparent ink from a viewpoint of imparting a deep design with a glass tone.

The transparent resin laminate of the present invention may include, from a surface layer side, the first hard coat, the second hard coat, the transparent resin film layer, and a third coat. By forming the third hard coat, it is easy to impart a suitable characteristic as a back surface. Fig. 1 is an exemplary conceptual diagram of a transparent resin laminate including the third hard coat. In Fig. 1, the reference sign 1 represents the first hard coat, the reference sign 2 represents the second hard coat, the reference sign 3 represents the transparent resin sheet, and the reference sign 4 represents the third hard coat.

In forming the hard coat, a hard coat forming surface or both surfaces of the transparent resin sheet functioning as a substrate may be subjected to an adhesion-facilitating treatment such as a corona discharge treatment or anchor coat formation in advance in order to enhance adhesion strength to the hard coat.

As an anchor coating agent for forming the anchor coat, a known agent such as a polyester, an acrylate, a polyurethane, an acrylic urethane, or a polyester urethane can be used, for example.

A method for forming the anchor coat using the anchor coating agent is not particularly limited, but a known web applying method can be used. Specific examples thereof include roll coating, gravure coating, reverse coating, roll brushing, spray coating, air knife coating, dip coating, and die coating.

The thickness of the anchor coat is usually about from 0.1 to 5 µm, and preferably from 0.5 to 2 µm.

The total light transmittance (measured according to JIS K7361-1:1997 using a turbidimeter "NDH2000" (trade name) available from Nippon Denshoku Industries Co., Ltd.) of the transparent resin laminate of the present invention is preferably 80% or more, more preferably 85% or more, still more preferably 88% or more, further still more preferably 89% or more, and most preferably 90% or more. A higher total light transmittance is more preferable.

The transparent resin laminate according to the present invention has a haze of preferably 5% or less, more preferably 3% or less, and still more preferably 2% or less (measured with a turbidimeter "NDH 2000" (trade name) available from Nippon Denshoku Industries Co., Ltd. in accordance with JIS K7136:2000). A lower haze is more preferable.

The transparent resin laminate of the present invention has an yellowness index (measured according to JIS K7105:1981 using a chromaticity meter "SolidSpec-3700" (trade name) available from Shimadzu Corporation) of preferably 3 or less, more preferably 2 or less, and still more preferably 1 or less. A lower yellowness index is more preferable.

The transparent resin laminate of the present invention preferably has a total light transmittance of 80% or more, a haze of 5% or less, and an yellowness index of 3 or less.

Furthermore, the transparent resin laminate of the present invention preferably has a total light transmittance of 80% or more and a haze of 3% or less, a total light transmittance of 80% or more and a haze of 2% or less, a total light transmittance of 85% or more and a haze of 5% or less, a total light transmittance of 85% or more and a haze of 3% or less, a total light transmittance of 85% or more and a haze of 2% or less, a total light transmittance of 88% or more and a haze of 5% or less, a total light transmittance of 88% or more and a haze of 3% or less, a total light transmittance of 88% or more and a haze of 2% or less, a total light transmittance of 89% or more and a haze of 5% or less, a total light transmittance of 89% or more and a haze of 3% or less, a total light transmittance of 89% or more and a haze of 2% or less, a total light transmittance of 90% or more and a haze of 5% or less, a total light transmittance of 90% or more and a haze of 3% or less, or a total light transmittance of 90% or more and a haze of 2% or less. In addition, the transparent resin laminate of the present invention preferably has an yellowness index of 3 or less, 2 or less, or 1 or less with respect to each combination group for these preferable ranges of the total light transmittance and the haze. Each combination group for these preferable ranges of the total light transmittance and the haze can be applied to any one of the first hard coat, the second hard coat, and the transparent resin sheet exemplified above.

For the transparent resin laminate of the present invention, the first hard coat surface has a water contact angle of preferably 100° or more, and more preferably 105° or more. When an article is produced using the transparent resin laminate of the present invention, the first hard coat usually forms a surface of the article. The water contact angle of the first hard coat surface of 100° or more causes the transparent resin laminate to have good fingerprint resistance (difficulty in deposition of a fouling or stain such as a fingerprint and easiness of wiping off a fouling or stain such as a fingerprint). A higher water contact angle is more preferable, and there is no particular upper limit for the water contact angle. However, it is usually suffice that the water contact angle is about 120° from a viewpoint of fingerprint resistance. Here, the water contact angle is a value measured according to a test (iv) in the following Examples.

For the transparent resin laminate of the present invention, the water contact angle at the first hard coat surface after 20,000 reciprocating wipes with a cotton is preferably 100° or more. The water contact angle after 25,000 reciprocating wipes with a cotton is more preferably 100° or more. The water contact angle after 20,000 reciprocating wipes with a cotton of 100° or more makes it possible to maintain a surface characteristic of the transparent resin laminate such as fingerprint resistance even after being repeatedly wiped with a handkerchief or the like. For the number of wipes with a cotton during which a water contact angle of 100° or more can be maintained, a larger number is more preferable. Here, the water contact angle after wipes with a cotton is a value measured according to a test (v) in the following Examples.

For the transparent resin laminate of the present invention, preferably, the water contact angle at the first hard coat surface is 100° or more and the water contact angle at the first hard coat surface after 20,000 reciprocating wipes with a cotton is 100° or more. Furthermore, for the transparent resin laminate of the present invention, preferably, the water contact angle at the first hard coat surface is 105° or more and the water contact angle at the first hard coat surface after 20,000 reciprocating wipes with a cottons is 100° or more, the water contact angle at the first hard coat surface is 100° or more and the water contact angle at the first hard coat surface after 25,000 reciprocating wipes with a cotton is 100° or more, or the water contact angle at the first hard coat surface is 105° or more and the water contact angle at the first hard coat surface after 25,000 reciprocating wipes with a cotton is 100° or more.

It should be noted that the total light transmittance and/or the haze and/or the yellowness index of the transparent resin laminate in any preferable range referred to above can be combined with the water contact angle at the first hard coat surface in any preferable range referred to herein, and/or can be combined with the water contact angle at the first hard coat surface after 20,000 or 25,000 reciprocating wipes with a cotton in any preferable range referred to herein.

For the transparent resin laminate of the present invention, the first hard coat surface has a pencil hardness (measured with a pencil "UNI" (trade name) available from Mitsubishi Pencil Co., Ltd. under a condition of a load of 750 g in accordance with JIS K5600-5-4) of preferably 5H or more, more preferably 6H or more, and still more preferably 7H or more. The pencil hardness of 5H or more causes the transparent resin laminate of the present invention to have particularly good scratch resistance. A higher pencil hardness is more preferable.

The pencil hardness on the first hard coat surface in any preferable range referred to herein can be combined with the total light transmittance and/or the haze and/or the yellowness index of the transparent resin laminate in any preferable range referred to above. In addition, the pencil hardness on the first hard coat surface in any preferable range referred to herein can be combined with the water contact angle at the first hard coat surface in any preferable range referred to above, and/or can be combined with the water contact angle at the first hard coat surface after 20,000 or 25,000 reciprocating wipes with a cotton in any preferable range referred to above.

### Production method

A method for producing the transparent resin laminate of the present invention is not particularly limited, but the transparent resin laminate can be produced by any method.

For example, from a viewpoint of adhesion between the first hard coat and the second hard coat, a preferable production method includes:
(1) a step of forming a wet coat of the second hard coat forming coating material on the transparent resin sheet;
(2) a step of irradiating the wet coat of the second hard coat forming coating material with an active energy ray at an integrated amount of light of 1 to 230 mJ/cm², preferably 5 to 200 mJ/cm², more preferably 10 to 160 mJ/cm², still more preferably 20 to 120 mJ/cm², most preferably 30 to 100 mJ/cm², and converting the wet coat of the second hard coat forming coating material into a coat in a set-to-touch state;
(3) a step of forming a wet coat of the first hard coat forming coating material on the coat of the second hard coat forming coating material in a set-to-touch state; and
(4) a step of preheating the wet coat of the first hard coat forming coating material to a temperature of 30 to 100°C, preferably 40 to 85°C, more preferably 50 to 75°C, and irradiating the wet coat with an active energy ray at an integrated amount of light of 240 to 10,000 mJ/cm², preferably 320 to 5,000 mJ/cm², more preferably 360 to 2,000 mJ/cm².

In the step (1), a method for forming the wet coat of the second hard coat forming coating material is not particularly limited, but a known web applying method can be used. Examples of the web applying method include roll coating, gravure coating, reverse coating, roll brushing, spray coating, air knife coating, dip coating, and die coating.

The wet coat of the second hard coat forming coating material formed in the step (1) is in a set-to-touch state or in a state with no tackiness in the step (2), causing no problem in handling such as sticking even in direct contact with a web apparatus. Therefore, in the subsequent step (3), a wet coat of the first hard coat forming coating material can be formed on the coat of the second hard coat forming coating material in a set-to-touch state.

The clause "a coat is in a set-to-touch state (in a state with no tackiness)" herein means that a coat is in a state in which no problem in handling occurs even when the coat is in direct contact with a web apparatus.

Irradiation with an active energy ray in the step (2) is performed such that the integrated amount of light is usually 1 J/cm² or more, preferably 5 mJ/cm² or more, more preferably 10 mJ/cm² or more, still more preferably 20 mJ/cm² or more, and most preferably 30 mJ/cm² or more from a viewpoint of converting the coat into a coat in a set-to-touch state reliably, although depending on a characteristic of a coating material used for the second hard coat forming coating material. At the same time, irradiation with an active energy ray is performed such that the integrated amount of light is usually 230 mJ/cm² or less, preferably 200 mJ/cm² or less, more preferably 160 mJ/cm² or less, still more preferably 120 mJ/cm² or less, and most preferably 100 mJ/cm² or less from a viewpoint of adhesiveness between the first hard coat and the second hard coat.

The wet coat of the second hard coat forming coating material is preferably predried before irradiation with an active energy ray in the step (2). Predrying described above can be performed by causing a web to pass through a drying furnace set at a temperature of about 23 to 150°C, preferably 50 to 120°C, at a line speed such that the time required to pass from the inlet to the outlet is about 0.5 to 10 minutes and preferably 1 to 5 minutes, for example.

When irradiation with an active energy ray is performed in the step (2), the wet coat of the second hard coat forming coating material may be preheated to a temperature of 40 to 120°C, preferably 70 to 100°C. This can convert the coat into a coat in a set-to-touch state reliably. A method for preheating the coat described above is not particularly limited, but preheating can be performed by any method. Specific examples of the method will be described below in the description of the step (4).

In the step (3), a method for forming the wet coat of the first hard coat forming coating material is not particularly limited, but a known web applying method can be used. Examples of the web applying method include roll coating, gravure coating, reverse coating, roll brushing, spray coating, air knife coating, dip coating, and die coating.

The wet coat of the first hard coat forming coating material formed in the step (3) is completely cured in the step (4). At the same time, the coat of the second hard coat forming coating material is also completely cured.

The above method can enhance adhesiveness between the first hard coat and the second hard coat, and without wishing to be bound by any theory it is presumed that the reason is that complete curing is simultaneously achieved for both the hard coats by limiting the integrated amount of light in irradiation with an active energy ray to an amount adequate to convert the coat into a coat in a set-to-touch state but inadequate to completely cure the coat in the step (2) and setting the integrated amount of light to an amount adequate to completely cure the coat in the step (4) for the first time.

Irradiation with an active energy ray in the step (4) is performed such that the integrated amount of light is usually 240 mJ/cm² or more, preferably 320 mJ/cm² or more, and more preferably 360 mJ/cm² or more from a viewpoint of completely curing the coat and adhesiveness between the first hard coat and the second hard coat. At the same time, the irradiation with an active energy ray is performed such that the integrated amount of light is 10,000 mJ/cm² or less, preferably 5,000 mJ/cm² or less, and more preferably 2,000 mJ/cm² or less from a viewpoint of preventing yellowing of a hard coat laminated film obtained and cost.

The wet coat of the first hard coat forming coating material is preferably predried before irradiation with an active energy ray in the step (4). Predrying described above can be performed by causing a web to pass through a drying furnace set at a temperature of about 23 to 150°C, preferably 50 to 120°C, at a line speed such that the time required to pass from the inlet to the outlet is about 0.5 to 10 minutes and preferably 1 to 5 minutes, for example.

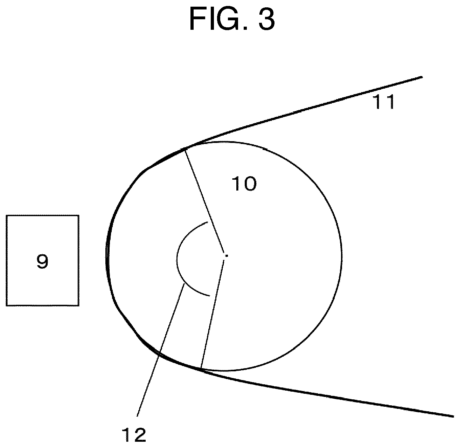

In irradiation with an active energy ray in the step (4), the wet coat of the first hard coat forming coating material is favorably preheated to a temperature of 30 to 100°C, preferably 40 to 85°C, more preferably 50 to 75°C even when the first hard coat forming coating material and the second hard coat forming coating material are largely different in characteristics from each other from a viewpoint of obtaining a good interlayer adhesion strength. A method for preheating the coat described above is not particularly limited, but preheating can be performed by any method. Examples thereof include a method in which a web is held by a mirror-finished metal roll 10 disposed opposite to an active energy ray (ultraviolet ray) irradiator 9 as illustrated in Fig. 3 and a surface temperature of the roll is controlled to a predetermined temperature; a method in which a temperature in an irradiation furnace surrounding an active energy ray irradiator is controlled to a predetermined temperature; and a combination of these methods.

An aging treatment may be performed after the step (4). By the aging treatment, characteristics of the transparent resin laminate can be stabilized.

### Article including the transparent resin laminate of the present invention

An article including the transparent resin laminate of the present invention is not particularly limited, but examples thereof include a window, a door, or the like for a building; a television, a personal computer, a tablet type information device, a smartphone, and housings and display surface plates thereof; a refrigerator, a washing machine, a cupboard, a costume shelf, and panels constituting these; a vehicle, a window of a vehicle, a windshield, a roof window, an instrument panel, or the like; an electronic signboard and a protective plate thereof; and a show window.

In producing an article using the transparent resin laminate of the present invention, in order to impart high designability to an obtained article, a decorative sheet may be laminated on a surface of the transparent resin sheet, opposite to the first and second hard coat forming surfaces. Such an embodiment is particularly effective when the transparent resin laminate of the present invention is used as a front panel of a door body for opening and closing a front portion of a main body of an article such as a refrigerator, a washing machine, a cupboard, or a costume shelf, or a flat panel of a lid body for opening and closing a flat portion of the main body. The decorative sheet is not limited, but any decorative sheet can be used. As the above decorative sheet, for example, any colored resin sheet can be used.

A resin of the colored resin sheet is not limited, but examples thereof include a polyester resin such as aromatic polyester or aliphatic polyester; an acrylic resin; a polycarbonate resin; a poly(meth)acrylimide resin; a polyolefin resin such as polyethylene, polypropylene, or polymethylpentene; a cellulose resin such as cellophane, triacetylcellulose, diacetylcellulose, or acetylcellulose butyrate; a styrene resin such as polystyrene, an acrylonitrile-butadiene-styrene copolymer resin (ABS resin), a styrene-ethylene-propylene-styrene copolymer, a styrene-ethylene-ethylene-propylene-styrene copolymer, a styrene-ethylene-butadiene-styrene copolymer, or a styrene-ethylene-butadiene-styrene copolymer; a polyvinyl chloride resin; a polyvinylidene chloride resin; a fluorine-containing resin such as polyvinylidene fluoride; polyvinyl alcohol, ethylene vinyl alcohol, polyether ether ketone, nylon, polyamide, polyimide, polyurethane, polyetherimide, polysulfone, and polyethersulfone. These sheets include an unstretched sheet, a uniaxially stretched sheet, and a biaxially stretched sheet. These sheets also include a laminated sheet obtained by laminating two or more layers of one or more types of these sheets.

The thickness of the colored resin sheet is not particularly limited, but may be usually 20 µm or more, preferably 50 µm or more, and more preferably 80 µm or more. At the same time, the thickness of the colored resin sheet may be usually 1500 µm or less, preferably 800 µm or less, and more preferably 400 µm or less from a viewpoint of meeting a demand for thickness reduction of an article.

A printed layer may be provided on a front side surface of the colored resin sheet, as desired, in order to enhance the sense of design. The printed layer is provided for imparting high designability, and can be formed by printing any pattern using an any ink and an any printing machine.

Printing can be performed directly or via an anchor coat entirely or partially on a surface of the transparent resin sheet, opposite to a hard coat forming surface thereof and/or on a front side surface of the colored resin sheet. Examples of the pattern include a metal-like pattern such as a hair line, a grain pattern, a stone mesh pattern imitating a surface of a rock such as marble, a fabric pattern imitating texture or a cloth-like pattern, a tile stitch pattern, a brickwork pattern, a parquet pattern, and a patchwork. As the printing ink, an ink obtained by appropriately mixing a pigment, a solvent, a stabilizer, a plasticizer, a catalyst, a curing agent, and the like with a binder can be used. Examples of the binder include a resin such as a polyurethane resin, a vinyl chloride-vinyl acetate copolymer resin, a vinyl chloride-vinyl acetate-acrylic copolymer resin, a chlorinated polypropylene resin, an acrylic resin, a polyester resin, a polyamide resin, a butyral resin, a polystyrene resin, a nitrocellulose resin, or a cellulose acetate resin, and a resin composition thereof. In addition, in order to provide a metal-like design, aluminum, tin, titanium, indium, an oxide thereof, or the like may be vapor-deposited directly or via an anchor coat entirely or partially on a surface of the transparent resin sheet, opposite to a hard coat forming surface thereof and/or on a front side surface of the colored resin sheet by a known method.

Lamination of the transparent resin sheet and the decorative sheet is not particularly limited, but can be performed by any method. Examples of the method include a dry lamination method using a known adhesive and a method for forming a layer of a known pressure-sensitive adhesive and then superimposing and pressing both the sheets.

### Examples

Hereinafter, the present invention will be described with reference to Examples, but the present invention is not limited thereto.

### Measurement and evaluation methods

Measurement and evaluation methods of physical properties relating to a transparent resin laminate will be described.

### (i) Total light transmittance

In accordance with JIS K7361-1:1997, the total light transmittance of each of a transparent resin sheet and a transparent resin laminate was measured using a turbidimeter "NDH 2000" (trade name) available from Nippon Denshoku Industries Co.

### (ii) Haze

According to JIS K7136:2000, the haze of each of a transparent resin sheet and a transparent resin laminate was measured using a turbidimeter "NDH 2000" (trade name) available from Nippon Denshoku Industries Co., Ltd.

### (iii) Yellowness index (YI)

According to JIS K7105:1981, the yellowness index of each of a transparent resin sheet and a transparent resin laminate was measured using a colorimeter "SolidSpec-3700" (trade name) available from Shimadzu Corporation.

### (iv) Water contact angle (initial water contact angle)

The water contact angle of a first hard coat surface of a transparent resin laminate was measured by a method for calculating the water contact angle from a width and a height of a water droplet (see JIS R3257:1999) using an automatic contact angle meter "DSA20" (trade name) of KRUSS GmbH.

### (v) Abrasion resistance (water contact angle after wipes with cotton)

A test piece was taken such that the size thereof was 150 mm in length and 50 mm in width and the machine direction of a transparent resin laminate was in the longitudinal direction of the test piece. This test piece was placed on a Gakushin tester according to JIS L0849:2013 such that the first hard coat of the transparent resin laminate was a surface. A stainless steel plate (10 mm in length, 10 mm in width, 1 mm in thickness) covered with a four-stacked-sheet gauze (medical type 1 gauze available from Kawamoto Corp.) was attached to a friction terminal of the Gakushin tester such that the length and width surface of the stainless steel plate was brought into contact with the test piece. A load of 350 g was placed on the stainless steel plate covered with the gauze, and the first hard coat surface of the test piece was rubbed 10,000 times reciprocatingly under conditions of a moving distance of the friction terminal of 60 mm and a speed of one reciprocation/sec. Thereafter, the water contact angle at the cotton-wiped portion was measured according to the method of the (iv). When the water contact angle was 100° or more, an operation of additionally performing 5,000 reciprocating rubs and then measuring the water contact angle at the cotton-wiped portion according to the method of the (iv) was repeated, and abrasion resistance was evaluated according to the following criteria.
A: The water contact angle was 100° or more even after 25,000 reciprocating rubs.
B: After 20,000 reciprocating rubs, the water contact angle was 100° or more, but after 25,000 reciprocating rubs, the water contact angle was less than 100°.
C: After 15,000 reciprocating rubs, the water contact angle was 100° or more, but after 20,000 reciprocating rubs, the water contact angle was less than 100°.
D: After 10,000 reciprocating rubs, the water contact angle was 100° or more, but after 15,000 reciprocating rubs, the water contact angle was less than 100°.
E: The water contact angle was less than 100° after 10,000 reciprocating rubs.

### (vi) Pencil hardness

The pencil hardness of a first hard coat surface of a transparent resin laminate was measured according to JIS K5600-5-4 using a pencil "UNI" (trade name) available from Mitsubishi Pencil Co., Ltd. under a condition of a load of 750 g.

### (vii) Scratch resistance

A transparent resin laminate was placed in a Gakushin tester according to JIS L0849:2013 such that a first hard coat of the transparent resin laminate was a surface. Subsequently, a steel wool of #0000 was attached to a friction terminal of the Gakushin tester, and a load of 500 g was then placed. An operation of visually observing the rubbed portion after 100 reciprocating rubs of a surface of the test piece was repeated, and scratch resistance was evaluated according to the following criteria.
A: No scratch was observed even after 500 reciprocating rubs.
B: No scratch was observed after 400 reciprocating rubs, but a scratch could be observed after 500 reciprocating rubs.
C: No scratch was observed after 300 reciprocating rubs, but a scratch could be observed after 400 reciprocating rubs.
D: No scratch was observed after 200 reciprocating rubs, but a scratch could be observed after 300 reciprocating rubs.
E: No scratch was observed after 100 reciprocating rubs, but a scratch could be observed after 200 reciprocating rubs.
F: A scratch could be observed after 100 reciprocating rubs.

### (viii) Surface smoothness (surface appearance)

While a first hard coat surface of a transparent resin laminate was irradiated with light of a fluorescent lamp by changing an incident angle in various directions, the surface was visually observed, and the surface smoothness (surface appearance) was evaluated according to the following criteria.
⊚ (very good): The surface had no undulation nor scratch. Even if being looked through closely to the light, the surface gave no impression of cloudiness.
○ (good): When being looked through closely to the light, the surface had a portion giving an impression of slight cloudiness.
Δ (slightly poor): When being looked closely, the surface had slightly recognized undulations and scratches. The surface also gave an impression of cloudiness.
× (poor):The surface had a large number of recognized undulations and scratches. The surface also gave a definite impression of cloudiness.

### (ix) Square lattice pattern test (adhesiveness)

In accordance with JIS K5600-5-6:1999, a square lattice pattern cut consisting of 100 cells (1 cell = 1 mm x 1 mm) was provided on a transparent resin laminate from a first hard coat surface side. Thereafter, a tape for an adhesion test was attached to the square lattice pattern, was rubbed with fingers, and was then peeled off. The criteria for evaluation were in accordance with Table 1 in the above standard of JIS.
Classification 0: Edges of the cuts were completely smooth, and none of the squares of the lattice was peeled off.
Classification 1: Small peeling of a coat was observed at the intersections of the cuts. A cross-cut area of clearly not more than 5% was affected.
Classification 2: A coat was peeled off along edges and/or at intersections of the cuts. A cross-cut area of clearly more than 5% but not more than 15% was affected.
Classification 3: A coat was largely peeled off along edges of cuts partially or entirely, and/or various parts of squares were peeled off partially or entirely. A cross-cut area of clearly more than 15% but not more than 35% was affected.
Classification 4: A coat was largely peeled off along edges of cuts partially or entirely, and/or some parts of squares were peeled off partially or entirely. A cross-cut area of clearly more than 35% but not more than 65% was affected.
Classification 5: A case where the degree of peeling was more than that in Classification 4 was classified into this classification.

### (x) Weather resistance

An accelerated weather resistance test of 300 hours was performed using a sunshine carbon arc lamp type weather resistance tester prescribed in JIS B7753:2007 under conditions in Table 10 of JIS A5759:2008 (a test piece which had been taken such that the size was 125 mm in length and 50 mm in width and the machine direction of a transparent resin laminate was in the longitudinal direction of the test piece was used as it was, and the test piece was not pasted on glass). The N number of tests was three. In all the tests, a case where there was no change in appearance such as swelling, cracking, or peeling in a transparent resin laminate was evaluated as an acceptable product (indicated as ⊚ in Tables), and the other cases were evaluated as an unacceptable product (indicated as × in Tables).

### (xi) Impact resistance

The transparent resin laminate was installed and fixed on a rectangular parallelepiped metal-made jig (1,100 mm in length, 900 mm in width, 200 mm in height) being formed of wall faces of a front face plate, a rear face plate and side face plates and having an opened upper part so that the hard coat surface directed upward and completely covered the opened part of the jig. Then, a metal ball of 100 mm in diameter and 4.11 kg in mass was each dropped three times in total from a height of 3,000 mm above the transparent resin laminate to a vertex of a regular triangle of 130 mm in one side marked on the vicinity of the center of a part covering the opened part of the transparent resin laminate. The number N of the test was made to be 3, and the cases where the metal ball did not shoot through the transparent resin laminate in all the tests were determined as passing (i.e. "⊚" in the following tables), and other cases were determined as failure (i.e. " × " in the following tables).

### (xii) Cutting processability (state of curved cut line)

A perfect circular cutting hole with a diameter of 2 mm was formed in a transparent resin laminate using a router processing machine performing automatic control with a computer. A mill used at this time was a four-bladed super-hard-alloy mill with nicks, having a cylindrically round tip, and a blade diameter was appropriately selected according to a portion to be processed. Subsequently, a cut end surface of the cutting hole was observed visually or under a microscope (100 times), and was evaluated according to the following criteria.
⊚ (very good):No crack or burr was observed even under a microscope.
○ (good):No crack was observed even under a microscope. However, a burr was observed.
Δ (slightly poor): No crack was observed visually. However, a crack was observed under a microscope.
× (poor): A crack was observed even visually.

### Raw materials used

### (A) Polyfunctional (meth)acrylate

(A-1) Dipentaerythritol hexaacrylate (hexafunctional)
(A-2) Pentaerythritol triacrylate (trifunctional)

### (B) Water-repelling agent

(B-1) An acryloyl group-containing fluoropolyether water-repelling agent "KY-1203" (trade name) available from Shin-Etsu Chemical Co., Ltd.: solid content 20% by mass
(B-2) A methacryloyl group-containing fluoropolyether water-repelling agent "FOMBLIN MT70" (trade name) available from Solvay S.A.: solid content 70% by mass

### (C) Silane coupling agent

(C-1) N-2-(aminoethyl)-3-aminopropylmethyldimethoxysilane "KBM-602" (trade name) available from Shin-Etsu Chemical Co., Ltd.
(C-2) N-2-(aminoethyl)-3-aminopropyltrimethoxysilane "KBM-603" (trade name) available from Shin-Etsu Chemical Co., Ltd.
(C-3) 3-aminopropyltrimethoxysilane "KBM-903" (trade name) available from Shin-Etsu Chemical Co., Ltd.
(C-4) 3-mercaptopropylmethyldimethoxysilane "KBM-802" (trade name) available from Shin-Etsu Chemical Co., Ltd.
(C-5) 3-glycidoxypropyltrimethoxysilane "KBM-403" (trade name) available from Shin-Etsu Chemical Co., Ltd.

### (D) Inorganic fine particles having an average particle size of 1 to 300 nm

(D-1) Silica fine particles the surfaces of which have been treated with a silane coupling agent having a vinyl group and which have an average particle size of 20 nm

### (E) Leveling agent

(E-1) A silicone-acrylate copolymer leveling agent "DISPARLON NSH-8430HF" (trade name) available from Kusumoto Chemicals, Ltd.: solid content 10% by mass
(E-2) A silicone-acrylate copolymer leveling agent "BYK-3550" (trade name) available from BYK Japan KK: solid content 52% by mass
(E-3) An acrylic polymer leveling agent "BYK-399" (trade name) available from BYK Japan KK: solid content 100% by mass
(E-4) A silicone leveling agent "DISPARLON LS-480" (trade name) available from Kusumoto Chemicals, Ltd.: solid content 100% by mass

### (F) Optional component

(F-1) A phenyl ketone photopolymerization initiator (1-hydroxycyclohexyl phenyl ketone) "SB-PI714" (trade name) available from Shuang Bang Industrial Corp.
(F-2) 1-methoxy-2-propanol

### (HI) First hard coat forming coating material

(H1-1) A coating material was obtained by mixing and stirring 100 parts by mass of the (A-1), 2 parts by mass (0.40 parts by mass in terms of solid content) of the (B-1), 0.06 parts by mass (0.042 parts by mass in terms of solid content) of the (B-2), 0.5 parts by mass of the (C-1), 4 parts by mass of the (F-1), and 100 parts by mass of the (F-2). Table 1 shows components and blending amounts thereof. In addition, values in terms of solid content are listed for the (B-1) and the component (B-2) in Tables.
(H1-2 to H1-16) Coating materials were obtained in a similar manner to the (H1-1) except that the components and blending amounts thereof were changed as shown in Table 1 or 2.

### [Table 1]

**Table 1**

| | First hard coat forming coating material | | | | | | | |
|---|---|---|---|---|---|---|---|---|
| Component (part by mass) | (H1-1) | (H1-2) | (H1-3) | (H1-4) | (H1-5) | (H1-6) | (H1-7) | (H1-8) |
| (A-1) | 100 | 100 | 100 | 100 | 100 | 100 | 100 | 100 |
| (B-1) | 0.40 | 0.080 | 0.80 | 2.0 | - | 8.0 | 0.40 | 0.40 |
| (B-2) | 0.042 | 0.0084 | 0.084 | 0.21 | - | 0.84 | 0.042 | 0.042 |
| (C-1) | 0.5 | 0.5 | 0.5 | 0.5 | 0.5 | 0.5 | 0.5 | - |
| (C-2) | - | - | - | - | - | - | - | - |
| (C-3) | - | - | - | - | - | - | - | - |
| (C-4) | - | - | - | - | - | - | - | - |
| (C-5) | - | - | - | - | - | - | - | - |
| (D-1) | - | - | - | - | - | - | 20 | - |
| (F-1) | 4 | 4 | 4 | 4 | 4 | 4 | 4 | 4 |
| (F-2) | 100 | 100 | 100 | 100 | 100 | 80 | 130 | 100 |

### [Table 2]

**Table 2**

| | First hard coat forming coating material | | | | | | | |
|---|---|---|---|---|---|---|---|---|
| Component (part by mass) | (H1-9) | (H1-10) | (H1-11) | (H1-12) | (H1-13) | (H1-14) | (H1-15) | (H1-16) |
| (A-1) | 100 | 100 | 100 | 100 | 100 | 100 | 100 | 100 |
| (B-1) | 0.40 | 0.40 | 0.40 | 0.40 | 0.40 | 0.40 | 0.40 | 0.40 |
| (B-2) | 0.042 | 0.042 | 0.042 | 0.042 | 0.042 | 0.042 | 0.042 | 0.042 |
| (C-1) | 0.01 | 0.1 | 1 | 5 | - | - | - | - |
| (C-2) | - | - | - | - | 0.5 | - | - | - |
| (C-3) | - | - | - | - | - | 0.5 | - | - |
| (C-4) | - | - | - | - | - | - | 0.5 | - |
| (C-5) | - | - | - | - | - | - | - | 0.5 |
| (D-1) | - | - | - | - | - | - | - | - |
| (F-1) | 4 | 4 | 4 | 4 | 4 | 4 | 4 | 4 |
| (F-2) | 100 | 100 | 100 | 105 | 100 | 100 | 100 | 100 |

### (H2) Second hard coat forming coating material

(H2-1) A coating material was obtained by mixing and stirring 100 parts by mass of the (A-2), 140 parts by mass of the (D-1), 2 parts by mass (0.2 parts by mass in terms of solid content) of the (E-1), 17 parts by mass of the (F-1), and 200 parts by mass of the (F-2). Table 3 shows components and blending amounts thereof. In addition, values in terms of solid content are listed for the (E-1) in Tables.
(H2-2 to H2-15) Coating materials were obtained in a similar manner to the (H2-1) except that the components and blending amounts thereof were changed as shown in Table 3 or 4.

### [Table 3]

**Table 3**

| | Second hard coat forming coating material | | | | | | |
|---|---|---|---|---|---|---|---|
| Component (part by mass) | (H2-1) | (H2-2) | (H2-3) | (H2-4) | (H2-5) | (H2-6) | (H2-7) |
| (A-2) | 100 | 100 | 100 | 100 | 100 | 100 | 100 |
| (D-1) | 140 | 140 | 140 | 140 | 140 | 140 | 140 |
| (E-1) | 0.2 | - | 0.1 | 0.4 | 0.6 | 1.5 | - |
| (E-2) | - | - | - | - | - | - | 0.2 |
| (E-3) | - | - | - | - | - | - | - |
| (E-4) | - | - | - | - | - | - | - |
| (F-1) | 17 | 17 | 17 | 17 | 17 | 17 | 17 |
| (F-2) | 200 | 200 | 200 | 200 | 200 | 200 | 200 |

### [Table 4]

**Table 4**

| | Second hard coat forming coating material | | | | | | | |
|---|---|---|---|---|---|---|---|---|
| Component (part by mass) | (H2-8) | (H2-9) | (H2-10) | (H2-11) | (H2-12) | (H2-13) | (H2-14) | (H2-15) |
| (A-2) | 100 | 100 | 100 | 100 | 100 | 100 | 100 | 100 |
| (D-1) | 140 | 140 | 140 | 80 | 200 | 30 | 400 | - |
| (E-1) | - | - | - | 0.2 | 0.2 | 0.2 | 0.2 | 0.2 |
| (E-2) | 0.4 | - | - | - | - | - | - | - |
| (E-3) | - | 0.3 | - | - | - | - | - | - |
| (E-4) | - | - | 0.3 | - | - | - | - | - |
| (F-1) | 17 | 17 | 17 | 17 | 17 | 17 | 17 | 17 |
| (F-2) | 200 | 200 | 200 | 155 | 250 | 120 | 420 | 200 |

### (A) Transparent resin sheet

### (a1-1) Acrylic resin sheet 1

Using an acrylic resin "Optimas 6000" (trade name) (glass transition temperature 119°C) available from Mitsubishi Gas Chemical Company and using an apparatus equipped with a T-die 5 as illustrated in Fig. 2 and an extruder (not illustrated), a melted sheet 6 of the above resin was continuously extruded from the T-die, and the melted sheet was supplied and introduced between a rotating first mirror-finished roll 7 (i.e. a roll to hold the melted sheet and send the melted sheet to a subsequent transfer roll, this applies to the following) and a rotating second mirror-finished roll 8, and was pressed to obtain a transparent resin sheet having a thickness of 1 mm. As setting conditions at this time, a set temperature of the first mirror-finished roll was 120°C, a set temperature of the second mirror-finished roll was 110°C, and a resin temperature at an outlet of the T-die was 300°C. The resulting transparent resin sheet had a total light transmittance of 92%, a haze of 0.5%, a yellowness index of 0.3, and a tensile elastic modulus of 3400 MPa. The tensile elastic modulus here was measured according to JIS K7127:1999 under conditions of a test piece type 1B and a tensile speed of 50 mm/min. (These conditions also were employed for the following production examples).

### (a1-2) Acrylic resin sheet 2

Using a poly(meth)acrylimide resin "PLEXIMID TT 50" (trade name) (glass transition temperature 154°C) available from Evonik Industries AG and using an apparatus equipped with a T-die 5 as illustrated in Fig. 2 and an extruder (not illustrated), the melted sheet 6 of the above resin was continuously extruded from the T-die, and the melted sheet was supplied and introduced between the rotating first mirror-finished roll 7 and the rotating second mirror-finished roll 8, and was pressed to obtain a transparent resin sheet having a thickness of 1 mm. As setting conditions at this time, a set temperature of the first mirror-finished roll was 140°C, a set temperature of the second mirror-finished roll was 120°C, and a resin temperature at an outlet of the T-die was 300°C. The resulting transparent resin sheet had a total light transmittance of 92%, a haze of 0.5%, a yellowness index of 0.3, and a tensile elastic modulus of 4300 MPa.

### (a1-3) Acrylic resin sheet 3

A transparent resin sheet was obtained in a similar manner to the (a1-1) except that the thickness was changed to 0.25 mm. As setting conditions at this time, a set temperature of the first mirror-finished roll was 120°C, a set temperature of the second mirror-finished roll was 110°C, and a resin temperature at an outlet of the T-die was 300°C. The resulting transparent resin sheet had a total light transmittance of 93%, a haze of 0.5%, a yellowness index of 0.2, and a tensile elastic modulus of 3150 MPa.

### (a2-1) Aromatic polycarbonate resin sheet

Using an aromatic polycarbonate "CALIBRE 301-4" (trade name) (glass transition temperature 151°C) available from Sumika Stylon Polycarbonate Limited and using an apparatus equipped with a T-die 5 as illustrated in Fig. 2 and an extruder (not illustrated), the melted sheet 6 of the above resin was continuously extruded from the T-die, and the melted sheet was supplied and introduced between the rotating first mirror-finished roll 7 and the rotating second mirror-finished roll 8, and was pressed to obtain a transparent resin sheet having a thickness of 1 mm. As setting conditions at this time, a set temperature of the first mirror-finished roll was 140°C, a set temperature of the second mirror-finished roll was 120°C, and a resin temperature at an outlet of the T-die was 300°C. The resulting transparent resin sheet had a total light transmittance of 90%, a haze of 0.6%, a yellowness index of 0.5, and a tensile elastic modulus of 2300 MPa.

### (a3-1) Polyester resin sheet 1

Using a PETG resin "Cadence GS1" (trade name) (glass transition temperature 81°C) which is a non-crystalline polyester resin available from Eastman Chemical Company and using an apparatus equipped with a T-die 5 as illustrated in Fig. 2 and an extruder (not illustrated), the melted sheet 6 of the above resin was continuously extruded from the T-die, and the melted sheet was supplied and introduced between the rotating first mirror-finished roll 7 and the rotating second mirror-finished roll 8, and was pressed to obtain a transparent resin sheet having a thickness of 1 mm. As setting conditions at this time, a set temperature of the first mirror-finished roll was 80°C, a set temperature of the second mirror-finished roll was 40°C, and a resin temperature at an outlet of the T-die was 200°C. The resulting transparent resin sheet had a total light transmittance of 89%, a haze of 1.3%, a yellowness index of 0.4, and a tensile elastic modulus of 1500 MPa.

### (a3-2) Polyester resin sheet 2

Using a non-crystalline polyester resin "Tritan FX200" (trade name) (glass transition temperature 119°C) available from Eastman Chemical Company and using an apparatus equipped with a T-die 5 as illustrated in Fig. 2 and an extruder (not illustrated), the melted sheet 6 of the above resin was continuously extruded from the T-die, and the melted sheet was supplied and introduced between the rotating first mirror-finished roll 7 and the rotating second mirror-finished roll 8, and was pressed to obtain a transparent resin sheet having a thickness of 1 mm. As setting conditions at this time, a set temperature of the first mirror-finished roll was 80°C, a set temperature of the second mirror-finished roll was 40°C, and a resin temperature at an outlet of the T-die was 230°C. The resulting transparent resin sheet had a total light transmittance of 90%, a haze of 1.2%, a yellowness index of 0.4, and a tensile elastic modulus of 1500 MPa.

### (a4-1) Laminated sheet 1

Using a two-kind/three-layer multi-manifold type co-extrusion film-forming apparatus equipped with an extruder and a T-die, a melted laminated sheet having both outer layers of an acrylic resin "Optimas 7500" (trade name) (glass transition temperature 119°C) available from Mitsubishi Gas Chemical Company a and having an intermediate layer of an aromatic polycarbonate "CALIBRE 301-4" (trade name) (glass transition temperature: 151°C) available from Sumika Stylon Polycarbonate Limited was continuously extruded from the T-die. The melted laminated sheet was supplied and introduced between a rotating first mirror-finished roll and a rotating second mirror-finished roll, and was pressed to obtain a transparent resin sheet having a total thickness of 1 mm, a thickness of each of both the outer layers of 0.1 mm, and a thickness of an intermediate layer of 0.8 mm. As setting conditions at this time, a set temperature of the first mirror-finished roll was 120°C, a set temperature of the second mirror-finished roll was 110°C, and a resin temperature at an outlet of the T-die was 300°C. The resulting transparent resin sheet had a total light transmittance of 91%, a haze of 0.6%, a yellowness index of 0.5, and a tensile elastic modulus of 2600 MPa.

### Example 1

Both surfaces of the acrylic resin sheet 1 of the (a1-1) were subjected to a corona discharge treatment. Both the surfaces had a wetting index of 64 mN/m. Subsequently, the second hard coat forming coating material of the (H2-1) was applied onto one surface of the acrylic resin sheet 1 of the (a1-1) such that the wet thickness was 40 µm (thickness after curing 22 µm) using a die type applicator. Subsequently, the resulting product was caused to pass through a drying furnace set at an inner temperature of 90°C at a line speed such that the time required to pass from the inlet to the outlet was one minute. Thereafter, the resulting product was treated using a curing apparatus having a high-pressure mercury lamp type ultraviolet irradiator 9 and a mirror-finished metal roll 10 having a diameter of 25.4 cm disposed opposite to each other (see Fig. 3) under conditions of a temperature of the mirror-finished metal roll 10 of 90°C and an integrated amount of light of 80 mJ/cm². In Fig. 3, the reference sign 11 represents a web, and the reference sign 12 represents a holding angle. The wet coat of the second hard coat forming coating material of the (H2-1) became a coat in a set-to-touch state. Subsequently, the first hard coat forming coating material of the (H1-1) was applied onto the coat of the second hard coat forming coating material of the (H2-1) in a set-to-touch state such that the wet thickness was 4 µm (thickness after curing 2 µm) using a die type applicator. Subsequently, the resulting product was caused to pass through a drying furnace set at an inner temperature of 80°C at a line speed such that the time required to pass from the inlet to the outlet was one minute. Thereafter, the resulting product was treated using a curing apparatus having a high-pressure mercury lamp type ultraviolet irradiator 9 and a mirror-finished metal roll 10 having a diameter of 25.4 cm disposed opposite to each other (see Fig. 3) under conditions of a temperature of the mirror-finished metal roll 10 of 60°C and an integrated amount of light of 480 mJ/cm² to form the first hard coat and the second hard coat. Subsequently, a third hard coat was formed on the other surface of the acrylic resin sheet 1 of the (a1-1) with the same coating material as that in forming the second hard coat (the (H2-1) in Example 1) using a die type applicator such that the thickness after curing was 22 µm, and a transparent resin laminate was obtained. This transparent resin laminate was subjected to the above tests (i) to (xii) for measurement and evaluation of physical properties. The results are shown in Table 5.

### Examples 2 to 16

Production of a transparent resin laminate and measurement and evaluation of physical properties thereof were performed in a similar manner to Example 1 except that the coating material shown in any one of Tables 5 to 7 was used in place of the (H1-1). The results are shown in any one of Tables 5 to 7.

### Examples 17 to 28-2 and 29

Production of a transparent resin laminate and measurement and evaluation of physical properties thereof were performed in a similar manner to Example 1 except that the coating material shown in any one of Tables 7 to 9 was used in place of the (H2-1). The results are shown in any one of Tables 7 to 9.

### Examples 30 to 34-2

Production of a transparent resin laminate and measurement and evaluation of physical properties thereof were performed in a similar manner to Example 1 except that the transparent resin sheet shown in Table 9 was used in place of the (a1-1). The results are shown in Table 9.

### Examples 35 to 38

Production of a transparent resin laminate and measurement and evaluation of physical properties thereof were performed in a similar manner to Example 1 except that the thickness of the first hard coat after curing was changed as shown in Table 10. The results are shown in Table 10. In addition, the hard coat is abbreviated as "HC" in Table 10 (also in Tables 11 to 13).

### Examples 39 to 42

Production of a transparent resin laminate and measurement and evaluation of physical properties thereof were performed in a similar manner to Example 1 except that the thickness of the second hard coat after curing was changed as shown in Table 10 or 11 and that the thickness of the third hard coat after curing was changed to the same thickness as the thickness of the second hard coat after curing. The results are shown in Table 10 or 11.

### Examples 43 to 57

Production of a transparent resin laminate and measurement and evaluation of physical properties thereof were performed in a similar manner to Example 1 except that the production conditions of a transparent resin laminate were changed as shown in any one of Tables 11 to 13. The results are shown in any one of Tables 11 to 13

### [Table 5]

**Table 5**

| | | Example 1 | Example 2 | Example 3 | Example 4 | Example 5 | Example 6 | Example 7 |
|---|---|---|---|---|---|---|---|---|
| Composition | First hard coat coating material | H1-1 | H1-2 | H1-3 | H1-4 | H1-5 | H1-6 | H1-7 |
| | Second hard coat coating material | H2-1 | H2-1 | H2-1 | H2-1 | H2-1 | H2-1 | H2-1 |
| | Transparent resin sheet | a1-1 | a1-1 | a1-1 | a1-1 | a1-1 | a1-1 | a1-1 |
| Evaluation results | Total light transmittance % | 90.4 | 90.4 | 90.3 | 89.9 | 90.4 | 89.3 | 89.6 |
| | Haze % | 0.7 | 0.6 | 0.8 | 1.8 | 0.6 | 4.0 | 0.8 |
| | Yellowness index | 0.6 | 0.6 | 0.6 | 0.6 | 0.6 | 0.6 | 0.6 |
| | Water contact angle deg | 116 | 115 | 116 | 118 | 72.1 | 119 | 116 |
| | Abrasion resistance | A | B | A | A | E | A | E |
| | Pencil hardness | 7H | 7H | 7H | 7H | 5H | 7H | 7H |
| | Scratch resistance | A | A | A | A | D | A | F |
| | Surface smoothness | ⊚ | ⊚ | ⊚ | ⊚ | ⊚ | ⊚ | ⊚ |
| | Square lattice pattern test | Classification 0 | Classification 0 | Classification 0 | Classification 0 | Classification 0 | Classification 0 | Classification 0 |
| | Weather resistance | ⊚ | ⊚ | ⊚ | ⊚ | ⊚ | ⊚ | ⊚ |
| | Impact resistance | ⊚ | ⊚ | ⊚ | ⊚ | ⊚ | ⊚ | ⊚ |
| | Cutting processability | ⊚ | ⊚ | ⊚ | ⊚ | ⊚ | ⊚ | ⊚ |

### [Table 6]

**Table 6**

| | | Example 8 | Example 9 | Example 10 | Example 11 | Example 12 | Example 13 | Example 14 |
|---|---|---|---|---|---|---|---|---|
| Composition | First hard coat coating material | H1-8 | H1-9 | H1-10 | H1-11 | H1-12 | H1-13 | H1-14 |
| | Second hard coat coating material | H2-1 | H2-1 | H2-1 | H2-1 | H2-1 | H2-1 | H2-1 |
| | Transparent resin sheet | a1-1 | a1-1 | a1-1 | a1-1 | a1-1 | a1-1 | a1-1 |
| Evaluation results | Total light transmittance % | 90.4 | 90.4 | 90.4 | 90.4 | 90.4 | 90.4 | 90.4 |
| | Haze % | 0.7 | 0.7 | 0.7 | 0.7 | 0.7 | 0.7 | 0.7 |
| | Yellowness index | 0.6 | 0.6 | 0.6 | 0.6 | 0.6 | 0.6 | 0.6 |
| | Water contact angle deg | 116 | 116 | 116 | 116 | 116 | 116 | 116 |
| | Abrasion resistance | A | A | A | A | A | A | A |
| | Pencil hardness | 7H | 7H | 7H | 7H | 7H | 7H | 7H |
| | Scratch resistance | A | A | A | A | A | A | A |
| | Surface smoothness | ⊚ | ⊚ | ⊚ | ⊚ | ⊚ | ⊚ | ⊚ |
| | Square lattice pattern test | Classification 4 | Classification 1 | Classification 0 | Classification 0 | Classification 0 | Classification 0 | Classification 0 |
| | Weather resistance | ⊚ | ⊚ | ⊚ | ⊚ | ⊚ | ⊚ | ⊚ |
| | Impact resistance | ⊚ | ⊚ | ⊚ | ⊚ | ⊚ | ⊚ | ⊚ |
| | Cutting processability | ⊚ | ⊚ | ⊚ | ⊚ | ⊚ | ⊚ | ⊚ |

### [Table 7]

**Table 7**

| | | Example 15 | Example 16 | Example 17 | Example 18 | Example 19 | Example 20 | Example 21 |
|---|---|---|---|---|---|---|---|---|
| Composition | First hard coat coating material | H1-15 | H1-16 | H1-1 | H1-1 | H1-1 | H1-1 | H1-1 |
| | Second hard coat coating material | H2-1 | H2-1 | H2-2 | H2-3 | H2-4 | H2-5 | H2-6 |
| | Transparent resin sheet | a1-1 | a1-1 | a1-1 | a1-1 | a1-1 | a1-1 | a1-1 |
| Evaluation results | Total light transmittance % | 90.4 | 90.4 | 90.4 | 90.4 | 90.4 | 90.4 | 90.4 |
| | Haze % | 0.7 | 0.7 | 0.8 | 0.7 | 0.7 | 0.7 | 1.0 |
| | Yellowness index | 0.6 | 0.6 | 0.6 | 0.6 | 0.6 | 0.6 | 0.6 |
| | Water contact angle deg | 116 | 116 | 116 | 116 | 116 | 116 | 116 |
| | Abrasion resistance | A | A | B | A | A | A | A |
| | Pencil hardness | 7H | 7H | 7H | 7H | 7H | 7H | 7H |
| | Scratch resistance | A | A | B | A | A | A | A |
| | Surface smoothness | ⊚ | ⊚ | ○ | ○ | ⊚ | ⊚ | ⊚ |
| | Square lattice pattern test | Classification 0 | Classification 3 | Classification 0 | Classification 0 | Classification 0 | Classification 0 | Classification 2 |
| | Weather resistance | ⊚ | ⊚ | ⊚ | ⊚ | ⊚ | ⊚ | ⊚ |
| | Impact resistance | ⊚ | ⊚ | ⊚ | ⊚ | ⊚ | ⊚ | ⊚ |
| | Cutting processability | ⊚ | ⊚ | ⊚ | ⊚ | ⊚ | ⊚ | ⊚ |

### [Table 8]

**Table 8**

| | | Example 22 | Example 23 | Example 24 | Example 25 | Example 26 | Example 27 | Example 28 | Example 28-2 |
|---|---|---|---|---|---|---|---|---|---|
| Composition | First hard coat coating material | H1-1 | H1-1 | H1-1 | H1-1 | H1-1 | H1-1 | H1-1 | H1-1 |
| | Second hard coat coating material | H2-7 | H2-8 | H2-9 | H2-10 | H2-11 | H2-12 | H2-13 | H2-15 |
| | Transparent resin sheet | a1-1 | a1-1 | a1-1 | a1-1 | a1-1 | a1-1 | a1-1 | a1-1 |
| Eval uation results | Total light transmittance % | 90.4 | 90.4 | 90.4 | 90.4 | 90.6 | 89.5 | 90.6 | 90.5 |
| | Haze % | 0.7 | 0.7 | 1.0 | 1.0 | 0.7 | 1.1 | 0.6 | 0.1 |
| | Yellowness index | 0.6 | 0.6 | 0.6 | 0.6 | 0.6 | 0.6 | 0.6 | 0.3 |
| | Water contact angle deg | 116 | 116 | 116 | 116 | 116 | 116 | 116 | 116 |
| | Abrasion resistance | A | A | A | A | A | A | A | A |
| | Pencil hardness | 7H | 7H | 7H | 7H | 6H | 8H | 3H | H |
| | Scratch resistance | A | A | A | A | A | A | A | A |
| | Surface smoothness | ⊚ | ⊚ | ○ | ⊚ | ⊚ | ⊚ | ⊚ | ⊚ |
| | Square lattice pattern test | Classification 0 | Classification 0 | Classification 0 | Classification 2 | Classification 0 | Classification 0 | Classification 0 | Classification 0 |
| | Weather resistance | ⊚ | ⊚ | ⊚ | ⊚ | ⊚ | ⊚ | ⊚ | ⊚ |
| | Impact resistance | ⊚ | ⊚ | ⊚ | ⊚ | ⊚ | ⊚ | ⊚ | ⊚ |
| | Cutting processability | ⊚ | ⊚ | ⊚ | ⊚ | ⊚ | ⊚ | ⊚ | ⊚ |

### [Table 9]

**Table 9**

| | | Example 29 | Example 30 | Example 31 | Example 32 | Example 33 | Example 34 | Example 34-2 |
|---|---|---|---|---|---|---|---|---|
| Composition | First hard coat coating material | H1-1 | H1-1 | H1-1 | H1-1 | H1-1 | H1-1 | H1-1 |
| | Second hard coat coating material | H2-14 | H2-1 | H2-1 | H2-1 | H2-1 | H2-1 | H2-1 |
| | Transparent resin sheet | a1-1 | a1-2 | a2-1 | a3-1 | a3-2 | a4-1 | a1-3 |
| Evaluation results | Total light transmittance % | 87.5 | 90.4 | 90.1 | 89.2 | 89.3 | 90.4 | 91.1 |
| | Haze % | 4.0 | 0.7 | 0.8 | 1.2 | 1.1 | 0.7 | 0.6 |
| | Yellowness index | 0.6 | 0.6 | 0.7 | 0.7 | 0.7 | 0.6 | 0.4 |
| | Water contact angle deg | 116 | 116 | 116 | 116 | 116 | 116 | 116 |
| | Abrasion resistance | A | A | A | A | A | A | A |
| | Pencil hardness | 9H | 7H | 2H | H | H | 7H | 7H |
| | Scratch resistance | A | A | A | A | A | A | A |
| | Surface smoothness | ⊚ | ⊚ | ⊚ | ⊚ | ⊚ | ⊚ | ⊚ |
| | Square lattice pattern test | Classification 0 | Classification 0 | Classification 0 | Classification 0 | Classification 0 | Classification 0 | Classification 0 |
| | Weather resistance | ⊚ | ⊚ | ⊚ | ⊚ | ⊚ | ⊚ | ⊚ |
| | Impact resistance | ⊚ | ⊚ | ⊚ | ⊚ | ⊚ | ⊚ | ⊚ |
| | Cutting processability | ⊚ | ⊚ | ⊚ | ⊚ | ⊚ | ⊚ | ⊚ |

### [Table 10]

**Table 10**

| | | Example 35 | Example 36 | Example 37 | Example 38 | Example 39 | Example 40 |
|---|---|---|---|---|---|---|---|
| First HC | Thickness µm | 0.5 | 1 | 3 | 5 | 2 | 2 |
| | Preheating for irradiation °C | 60 | 60 | 60 | 60 | 60 | 60 |
| | Integrated amount of light mJ/cm² | 480 | 480 | 480 | 480 | 480 | 480 |
| Second HC | Thickness µm | 22 | 22 | 22 | 22 | 15 | 18 |
| | Preheating for irradiation °C | 90 | 90 | 90 | 90 | 90 | 90 |
| | Integrated amount of light mJ/cm² | 80 | 80 | 80 | 80 | 80 | 80 |
| Evaluation results | Total light transmittance % | 90.4 | 90.4 | 90.4 | 90.4 | 90.6 | 90.3 |
| | Haze % | 0.7 | 0.7 | 0.9 | 1.4 | 0.7 | 0.7 |
| | Yellowness index | 0.6 | 0.6 | 0.6 | 0.6 | 0.6 | 0.6 |
| | Water contact angle deg | 116 | 116 | 116 | 116 | 116 | 116 |
| | Abrasion resistance | B | A | A | A | A | A |
| | Pencil hardness | 5H | 7H | 7H | 7H | 5H | 7H |
| | Scratch resistance | B | A | A | A | A | A |
| | Surface smoothness | ⊚ | ⊚ | ⊚ | ⊚ | ⊚ | ⊚ |
| | Square lattice pattern test | Classification 0 | Classification 0 | Classification 0 | Classification 2 | Classification 0 | Classification 0 |
| | Weather resistance | ⊚ | ⊚ | ⊚ | ⊚ | ⊚ | ⊚ |
| | Impact resistance | ⊚ | ⊚ | ⊚ | ⊚ | ⊚ | ⊚ |
| | Cutting processability | ⊚ | ⊚ | ⊚ | ⊚ | ⊚ | ⊚ |

### [Table 11]

**Table 11**

| | | Example 41 | Example 42 | Example 43 | Example 1 | Example 44 | Example 45 |
|---|---|---|---|---|---|---|---|
| First HC | Thickness µm | 2 | 2 | 2 | 2 | 2 | 2 |
| | Preheating for irradiation °C | 60 | 60 | 60 | 60 | 60 | 60 |
| | Integrated amount of light mJ/cm² | 480 | 480 | 480 | 480 | 480 | 480 |
| Second HC | Thickness µm | 25 | 35 | 22 | 22 | 22 | 22 |
| | Preheating for irradiation °C | 90 | 90 | 90 | 90 | 90 | 90 |
| | Integrated amount of light mJ/cm² | 80 | 80 | 30 | 80 | 120 | 160 |
| Evaluation results | Total light transmittance % | 90.0 | 89.5 | 90.4 | 90.4 | 90.4 | 90.4 |
| | Haze % | 0.7 | 0.7 | 0.7 | 0.7 | 0.7 | 0.7 |
| | Yellowness index | 0.6 | 0.6 | 0.6 | 0.6 | 0.6 | 0.6 |
| | Water contact angle deg | 116 | 116 | 116 | 116 | 116 | 116 |
| | Abrasion resistance | A | A | A | A | A | A |
| | Pencil hardness | 7H | 9H | 7H | 7H | 7H | 7H |
| | Scratch resistance | A | A | A | A | A | A |
| | Surface smoothness | ⊚ | ⊚ | ⊚ | ⊚ | ⊚ | ⊚ |
| | Square lattice pattern test | Classification 0 | Classification 0 | Classification 0 | Classification 0 | Classification 0 | Classification 1 |
| | Weather resistance | ⊚ | ⊚ | ⊚ | ⊚ | ⊚ | ⊚ |
| | Impact resistance | ⊚ | ⊚ | ⊚ | ⊚ | ⊚ | ⊚ |
| | Cutting processability | ⊚ | ⊚ | ⊚ | ⊚ | ⊚ | ⊚ |

### [Table 12]

**Table 12**

| | | Example 46 | Example 47 | Example 48 | Example 49 | Example 50 | Example 51 |
|---|---|---|---|---|---|---|---|
| First HC | Thickness µm | 2 | 2 | 2 | 2 | 2 | 2 |
| | Preheating for irradiation °C | 60 | 60 | 40 | 80 | 40 | 80 |
| | Integrated amount of light mJ/cm² | 480 | 480 | 480 | 480 | 480 | 480 |
| Second HC | Thickness µm | 22 | 22 | 22 | 22 | 22 | 22 |
| | Preheating for irradiation °C | 90 | 90 | 90 | 90 | 90 | 90 |
| | Integrated amount of light mJ/cm² | 230 | 300 | 80 | 80 | 120 | 120 |
| Evaluation results | Total light transmittance % | 90.4 | 90.4 | 90.4 | 90.4 | 90.4 | 90.4 |
| | Haze % | 0.7 | 0.7 | 0.7 | 0.7 | 0.7 | 0.7 |
| | Yellowness index | 0.6 | 0.6 | 0.6 | 0.6 | 0.6 | 0.6 |
| | Water contact angle deg | 116 | 116 | 110 | 116 | 110 | 116 |
| | Abrasion resistance | A | A | A | A | A | A |
| | Pencil hardness | 7H | 7H | 7H | 7H | 7H | 7H |
| | Scratch resistance | A | A | A | A | A | A |
| | Surface smoothness | ⊚ | ⊚ | ⊚ | ⊚ | ⊚ | ⊚ |
| | Square lattice pattern test | Classification 3 | Classification 4 | Classification 0 | Classification 0 | Classification 1 | Classification 1 |
| | Weather resistance | ⊚ | ⊚ | ⊚ | ⊚ | ⊚ | ⊚ |
| | Impact resistance | ⊚ | ⊚ | ⊚ | ⊚ | ⊚ | ⊚ |
| | Cutting processability | ⊚ | ⊚ | ⊚ | ⊚ | ⊚ | ⊚ |

### [Table 13]

**Table 13**

| | | Example 52 | Example 53 | Example 54 | Example 55 | Example 56 | Example 57 |
|---|---|---|---|---|---|---|---|
| First HC | Thickness µm | 2 | 2 | 2 | 2 | 2 | 2 |
| | Preheating for irradiation °C | 25 | 40 | 80 | 110 | 40 | 80 |
| | Integrated amount of light mJ/cm² | 480 | 480 | 480 | 480 | 480 | 480 |
| Second HC | Thickness µm | 22 | 22 | 22 | 22 | 22 | 22 |
| | Preheating for irradiation °C | 90 | 90 | 90 | 90 | 90 | 90 |
| | Integrated amount of light mJ/cm² | 160 | 160 | 160 | 160 | 230 | 230 |
| Evaluation results | Total light transmittance % | 90.4 | 90.4 | 90.4 | 90.4 | 90.4 | 90.4 |
| | Haze % | 0.7 | 0.7 | 0.7 | 0.7 | 0.7 | 0.7 |
| | Yellowness index | 0.6 | 0.6 | 0.6 | 0.6 | 0.6 | 0.6 |
| | Water contact angle deg | 110 | 110 | 116 | 110 | 110 | 116 |
| | Abrasion resistance | A | A | A | A | A | A |
| | Pencil hardness | 7H | 7H | 7H | 7H | 7H | 7H |
| | Scratch resistance | A | A | A | A | A | A |
| | Surface smoothness | ⊚ | ⊚ | ⊚ | ⊚ | ⊚ | ⊚ |
| | Square lattice pattern test | Classification 5 | Classification 2 | Classification 2 | Classification 5 | Classification 3 | Classification 3 |
| | Weather resistance | ⊚ | ⊚ | ⊚ | ⊚ | ⊚ | ⊚ |
| | Impact resistance | ⊚ | ⊚ | ⊚ | ⊚ | ⊚ | ⊚ |
| | Cutting processability | ⊚ | ⊚ | ⊚ | ⊚ | ⊚ | ⊚ |

These experimental results reveal that a preferable transparent resin laminate of the present invention is excellent in transparency, rigidity, scratch resistance, weather resistance, impact resistance, and processability, and can maintain initial characteristics even when being repeatedly squeezed with a wiper or the like or repeatedly wiped with a cloth or the like. Therefore, the transparent resin laminate of the present invention can be used suitably as a window, a windshield, or the like for a vehicle, a window, a door, or the like for a building, a protective plate or the like for an electronic signboard, a front panel or the like for a household electric appliance such as a refrigerator, a door or the like of furniture such as a cupboard, a housing or the like for a television, a personal computer, a tablet type information device, or a smartphone, a show window, or the like.

### Reference Signs List

- 1:: First hard coat
- 2:: Second hard coat
- 3:: Transparent resin sheet
- 4:: Third hard coat
- 5:: T-die
- 6:: Melted sheet
- 7:: First mirror-finished roll
- 8:: Second mirror-finished roll
- 9:: Ultraviolet irradiator
- 10:: Mirror-finished metal roll
- 11:: Web
- 12:: Holding angle

Further aspects of the present invention are set out below:
1. A transparent resin laminate comprising, from a surface layer side, a first hard coat, a second hard coat, and a transparent resin sheet layer, wherein
   the first hard coat is formed of a coating material comprising:
   (A) 100 parts by mass of a polyfunctional (meth)acrylate;
   (B) 0.01 to 7 parts by mass of a water-repelling agent; and
   (C) 0.01 to 10 parts by mass of a silane coupling agent, and
   containing no inorganic particles,
   the second hard coat is formed of a coating material comprising:
   (A) 100 parts by mass of a polyfunctional (meth)acrylate; and
   (D) 50 to 300 parts by mass of inorganic fine particles having an average particle size of 1 to 300 nm, and
   the transparent resin sheet has a thickness of 0.2 mm or more.
2. The transparent resin laminate according to aspect 1, wherein the (C) silane coupling agent comprises one or more selected from the group consisting of a silane coupling agent having an amino group and a silane coupling agent having a mercapto group.
3. The transparent resin laminate according to aspect 1 or 2, wherein the (B) water-repelling agent comprises a (meth)acryloyl group-containing fluoropolyether water-repelling agent.
4. The transparent resin laminate according to any one of aspects 1 to 3, wherein the second hard coat forming coating material further comprises (E) 0.01 to 1 part by mass of a leveling agent.
5. A transparent resin laminate comprising, from a surface layer side, a first hard coat, a second hard coat, and a transparent resin sheet layer, wherein
   the first hard coat is formed of a coating material containing no inorganic particles,
   the second hard coat is formed of a coating material containing inorganic particles,
   the transparent resin sheet has a thickness of 0.2 mm or more, and
   the following requirements (i) to (iii) are satisfied:
   (i) a total light transmittance of 80% or more;
   (ii) a haze of 5% or less; and
   (iii) a yellowness index of 3 or less.
6. A transparent resin laminate comprising, from a surface layer side, a first hard coat, a second hard coat, and a transparent resin sheet layer, wherein
   the first hard coat is formed of a coating material containing no inorganic particles,
   the second hard coat is formed of a coating material containing inorganic particles,
   the transparent resin sheet has a thickness of 0.2 mm or more, and
   the following requirements (iv) and (v) are satisfied;
   (iv) a water contact angle at the first hard coat surface of 100° or more; and
   (v) a water contact angle at the first hard coat surface after 20,000 reciprocating wipes with a cotton of 100° or more.
7. An article comprising the transparent resin laminate according to any one of aspects 1 to 6.

## Claims

1. A transparent resin laminate comprising, in order from a surface layer side, a first hard coat, a second hard coat, and a transparent resin sheet layer, wherein
the first hard coat is formed of a coating material containing no inorganic particles,
the second hard coat is formed of a coating material containing inorganic particles,
the transparent resin sheet has a thickness of 0.2 mm or more, and
the following requirements (iv) and (v) are satisfied;
(iv) a water contact angle at the first hard coat surface of 100° or more; and
(v) a water contact angle at the first hard coat surface after 20,000 reciprocating wipes with a cotton of 100° or more.

2. The transparent resin laminate according to claim 1,
wherein
the following requirements (i) to (iii) for the transparent resin laminate are satisfied:
(i) a total light transmittance of 80% or more;
(ii) a haze of 5% or less; and
(iii) a yellowness index of 3 or less.

3. The transparent resin laminate according to claim 1 or 2, further satisfying the following requirement (vi):
(vi) the first hard coat has a surface with a pencil hardness of 5H or more.

4. The transparent resin laminate according to any one of claims 1 to 3, wherein the first hard coat has a surface with a pencil hardness of 6H or more.

5. The transparent resin laminate according to any one of claims 1 to 4, wherein the first hard coat has a thickness of 0.5 µm or more and 5 µm or less.

6. The transparent resin laminate according to any one of claims 1 to 5, wherein the second hard coat has a thickness of 10 µm or more and 30 µm or less.

7. An article comprising the transparent resin laminate according to any one of claims 1 to 6.

8. An article comprising the transparent resin laminate according to any one of claims 1 to 6 and a decorative sheet,
wherein the decorative sheet is laminated on a surface of the transparent resin sheet, the surface being opposite to a surface of the transparent resin sheet on which the first and second hard coats are formed.
